# EUROPEAN PATENT SPECIFICATION

(11) **EP 2 988 248 B1**
(45) Date of publication and mention of the grant of the patent: **18.09.2019**
(21) Application number: 15002118.6
(22) Date of filing: 16.07.2015
(51) Int. Cl.: G06K 9/00, G06K 7/10, H04N 5/232

(54) **IMAGE PROCESSING APPARATUS, IMAGE PROCESSING METHOD, INFORMATION PROCESSING APPARATUS, INFORMATION PROCESSING METHOD, AND PROGRAM**
BILDVERARBEITUNGSVORRICHTUNG, BILDVERARBEITUNGSVERFAHREN, INFORMATIONSVERARBEITUNGSVORRICHTUNG, INFORMATIONSVERARBEITUNGSVERFAHREN UND PROGRAMM
APPAREIL DE TRAITEMENT D'IMAGES, PROCÉDÉ DE TRAITEMENT D'IMAGES, APPAREIL DE TRAITEMENT D'INFORMATIONS, PROCÉDÉ DE TRAITEMENT D'INFORMATIONS ET PROGRAMME

(30) Priority: 22.07.2014 JP 2014148888; 08.08.2014 JP 2014162573
(43) Date of publication of application: 24.02.2016
(73) Proprietor: Canon Kabushiki Kaisha, Tokyo (JP)
(72) Inventor: Mayuzumi, Ichiko, Tokyo (JP)
(74) Representative: WESER & Kollegen Patentanwälte PartmbB

(56) References cited:
- US-A1- 2014 193 034
- Andrew J Davison ET AL: "REAL-TIME 3D SLAM WITH WIDE-ANGLE VISION", , 5 July 2004 (2004-07-05), XP055235856, Retrieved from the Internet: URL:http://www.robots.ox.ac.uk/~lav/Papers /davison_etal_iav2004/davison_etal_iav2004 .pdf [retrieved on 2015-12-11]
- DANIEL POHL ET AL: "Improved pre-warping for wide angle, head mounted displays", PROCEEDINGS OF THE 19TH ACM SYMPOSIUM ON VIRTUAL REALITY SOFTWARE AND TECHNOLOGY, VRST '13, 1 January 2013 (2013-01-01), page 259, XP055237173, New York, New York, USA DOI: 10.1145/2503713.2503752 ISBN: 978-1-4503-2379-6
- POPA M C ET AL: "Semantic assessment of shopping behavior using trajectories, shopping related actions, and context information", PATTERN RECOGNITION LETTERS, ELSEVIER, AMSTERDAM, NL, vol. 34, no. 7, 3 May 2012 (2012-05-03), pages 809-819, XP029002992, ISSN: 0167-8655, DOI: 10.1016/J.PATREC.2012.04.015
- Nadeem Anjum ET AL: "Intelligent Video Surveillance: Systems and Technology, Chapter 11.3: Nonoverlapping Cameras" In: "Intelligent Video Surveillance: Systems and Technology", 2 February 2012 (2012-02-02), CRC Press, XP055237319, pages 310-315, * Chapter 11.3, fig. 11.5 *
- Hamid Aghajan ET AL: "Multi-camera networks : principles and applications, Chapter 10.2: Omnidirectional imaging, Chapter 10.3: Calibration of Catadrioptic Cameras" In: "Multi-camera networks : principles and applications", 2 February 2009 (2009-02-02), Academic press, XP055237314, pages 240-250, * Chapters 10.2-10.3 *

## Description

### BACKGROUND OF THE INVENTION

### Field of the Invention

The present invention relates to an image processing apparatus, an image processing method, an information processing apparatus, an information processing method, and a program and, more particularly, is suitable when it is used to photograph an image through a wide-angle image pickup unit.

### Description of the Related Art

There has been known a system for photographing a range, in a lump, wider than a range of an image pickup apparatus of a normal angle of view by using a wide-range image pickup apparatus having a wide-angle image pickup unit such as a fisheye lens, omnidirectional mirror, or the like. According to such wide-range image pickup apparatuses, although a wide range can be photographed in a lump, an image photographed by the wide-range image pickup apparatus is distorted in a circular shape and, the more a position of the image is close to a circumferential part, the more the distortion increases. In the wide-range image pickup apparatus, since the range to be photographed is wide and the image has a distortion, there is such a tendency that it takes a time for a process to detect a human from the pickup image.

Therefore, a distortion correcting process (converting process of a geometrical image) for correcting the image photographed by the wide-range image pickup apparatus to an image of a small distortion is necessary. The distortion correcting process needs a distortion correcting process which depends on an installation direction of a camera in addition to a distortion correcting process which is peculiar to a lens.

Japanese Patent Application Laid-Open No. 2007-244734 discloses such a technique that when a human body is detected from an image photographed by a fisheye lens camera, a weight is added to each area of the image, and thereafter, the human body is detected. According to the technique disclosed in Japanese Patent Application Laid-Open No. 2007-244734, an area extraction is performed based on feature amounts obtained by multiplying different weight coefficients in accordance with magnitudes of distortions of a central part and a peripheral part of the image photographed by the fisheye lens camera. By calculating the feature amounts on the assumption that the weight coefficient of the peripheral part of the image is equal to 2 and the weight coefficient of a portion near the circumference of the image is equal to 1, the human body existing in the peripheral part of the image is enabled to be easily detected.

Japanese Patent Application Laid-Open No. 2003-152826 discloses such a technique that an abnormality is detected by a sound, an image in the direction where the abnormality was detected is obtained, and feature amounts on the obtained image are extracted. According to the technique disclosed in Japanese Patent Application Laid-Open No. 2003-152826, a target is limited to the image in the direction where the abnormality of the sound was detected and the feature amounts are extracted.

Japanese Patent Application Laid-Open No. 2008-061260 discloses such a technique that as a distortion correction of a fisheye lens camera, a correction in which a coordinate conversion for correcting an installation angle of the fisheye lens camera and a coordinate conversion for correcting a distortion of a fisheye lens image are combined. According to the technique disclosed in Japanese Patent Application Laid-Open No. 2008-061260, parameters such as central position of the image, aspect ratio of the image, radius of an image area, and the like are calculated from a photographed image, and parameters which are used for the distortion correction of the fisheye lens image are obtained. Moreover, US Patent Application Laid-Open No. 2014/0193034 relates to detection of an object from a video image where large distortion of an image may be generated for covering a wide field of view. And Andrew J. Davison et al ("REAL-TIME 3D SLAM WITH WIDE-ANGLE VISION", 5th IFAC/EURON Symposium on Intelligent Autonomous Vehicles) discuss single-camera simultaneous localization and mapping for wide angle optics. However, as for the image photographed by the fisheye lens camera, since its image pickup range is wide, if the human body is detected in the whole image, it takes a time for a process.

According to the technique disclosed in Japanese Patent Application Laid-Open No. 2007-244734, the weight is
added every area of the image and easiness of the detection of the human body is controlled. However, in the detecting process of the human body, it is necessary to raster-scan the image from an edge. Therefore, a time required for the detecting process of the human body is still long.

According to the technique disclosed in Japanese Patent Application Laid-Open No. 2003-152826, there is provided the method of extracting the feature amounts by limiting the target to the image in the direction where the abnormality of the sound was detected. Therefore, feature amounts of an image in an area where an abnormality of the sound is not detected cannot be extracted.

According to the technique disclosed in Japanese Patent Application Laid-Open No. 2008-061260, for the coordinate conversion for correcting the installation angle of the fisheye lens camera, it is necessary for the user to manually set the installation angle of the fisheye lens camera. If the user made an erroneous setting, since the distortion correcting process cannot be accurately executed, there is a risk that the image obtained after the distortion correcting process is not a correct image.

Therefore, a detection target on the image photographed by using the wide-angle image pickup unit is enabled to be efficiently detected.

### SUMMARY OF THE INVENTION

According to an aspect of the invention, there is provided an image processing apparatus according to claim 1.

According to another aspect of the invention, there is provided an image processing method according to claim 9.

According to still another aspect of the invention, there is provided a non-transitory computer-readable storage medium according to claim 10.

The other claims relate to further developments.

Further features of the present invention will become apparent from the following description of exemplary embodiments with reference to the attached drawings.

### BRIEF DESCRIPTION OF THE DRAWINGS

FIG. 1 is a diagram illustrating a first example of a construction of an image processing apparatus.
FIG. 2 is a diagram illustrating relations among frame intervals, human body detection process intervals, and human body process times.
FIG. 3 is a diagram illustrating a first example of a pickup image.
FIG. 4 is a diagram illustrating a second example of a pickup image.
FIG. 5 is a flowchart for describing a first
   example of an operation of the image processing apparatus.
FIG. 6 is a diagram illustrating a second example of a construction of an image processing apparatus.
FIG. 7 is a flowchart for describing a second example of the operation of the image processing apparatus.
FIG. 8 is a diagram illustrating a third example of a construction of an image processing apparatus.
FIG. 9A is a flowchart for describing a first example of a process of the image processing apparatus.
FIG. 9B is a flowchart for describing a second example of the process of the image processing apparatus.
FIG. 10 is a diagram illustrating a third example of the pickup image.
FIG. 11 is a diagram illustrating a fourth example of the pickup image.
FIG. 12 is a diagram illustrating a fourth example of a construction of an image processing apparatus.
FIG. 13 is a flowchart for describing a third example of the process of the image processing apparatus.
FIG. 14 is a diagram illustrating a fifth example of a construction of an image processing apparatus.
FIG. 15 is a flowchart for describing a fourth example of the process of the image processing apparatus.
FIG. 16 is a diagram illustrating a construction of hardware of the image processing apparatuses.

### DESCRIPTION OF THE EMBODIMENTS

Preferred embodiments of the present invention will now be described in detail hereinbelow with reference to the accompanying drawings. Constructions illustrated in the following embodiments are nothing but examples and the invention is not limited by the constructions of the following embodiments.

### <First Embodiment>

First, the first embodiment will be described.

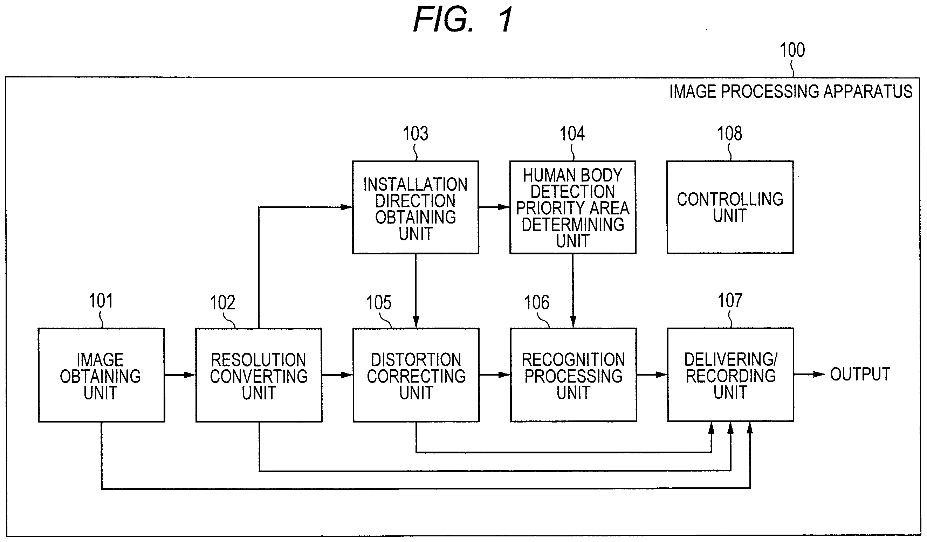

FIG. 1 is a block diagram illustrating an example of a construction of an image processing apparatus 100 of the embodiment.

In FIG. 1, the image processing apparatus 100 has an image obtaining unit 101, a resolution converting unit 102, an installation direction obtaining unit 103, a human body detection priority area determining unit 104, a distortion correcting unit 105, a recognition processing unit 106, a delivering/recording unit 107, and a controlling unit 108.

The image obtaining unit 101 has: a wide-angle image pickup unit such as a fisheye lens or an omnidirectional mirror; an image pickup device for photographing an image through the fisheye lens or the like; and a frame memory. The image photographed through the fisheye lens or the like is temporarily stored in the frame memory and is sent to the resolution converting unit 102 at a predetermined frame rate. As mentioned above, in the embodiment, a case where the image processing apparatus 100 is an image pickup apparatus will be described as an example. In the following description, the image processing apparatus 100 is referred to as a "camera" in accordance with necessity. The image obtaining unit 101 having the fisheye lens may be provided as an image pickup apparatus in the outside of the image processing apparatus 100. In the case of using such a construction, the image processing apparatus 100 obtains the image photographed through the fisheye lens from the image pickup apparatus. The image obtaining unit 101 can function as a first obtaining unit.

The resolution converting unit 102 converts the image obtained by the image obtaining unit 101 into an image of a low resolution for image analysis or into an image of a resolution suitable for delivery. The resolution converting unit 102 performs not only the conversion of the resolution but also a conversion of the frame rate in accordance with necessity.

The installation direction obtaining unit 103 obtains information of the installation direction (image pickup direction) of the camera. In the embodiment, the installation direction obtaining unit 103 obtains information about whether or not the camera has been installed to the ceiling or the camera has been installed to the wall surface (side surface) as an example of the information of the installation direction of the camera. If the camera has been installed to the ceiling, a central optical axis of the camera faces the vertical direction. That is, the central optical axis of the camera and the horizontal surface (ground surface or ceiling surface) perpendicularly cross. If the camera has been installed to the wall surface, the central optical axis of the camera faces the perpendicular direction. That is, the central optical axis of the camera and the horizontal surface (ground surface or ceiling surface) are parallel. The installation direction obtaining unit 103 can function as a second obtaining unit.

As mentioned above, in the embodiment, for the purpose of simplicity, the installation of the camera is limited to the case where the camera is installed to the ceiling or the wall surface. However, the installation direction of the camera is not limited to such a case. The method which will be described in the embodiment can be applied even to a case where the camera is installed in an arbitrary direction such as a case where the camera is installed to the wall surface with an angle of inclination.

A method of obtaining the installation direction of the camera is not limited. For example, the installation direction of the camera may be obtained by any method such as method whereby the user manually sets the installation direction of the camera to the image processing apparatus 100, method whereby the image processing apparatus 100 automatically obtains the installation direction of the camera from the image obtained by the image obtaining unit 101, or the like.

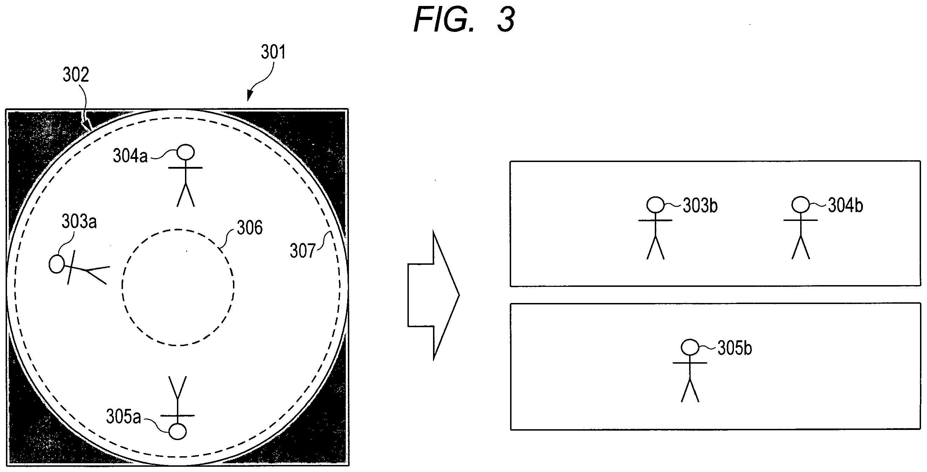

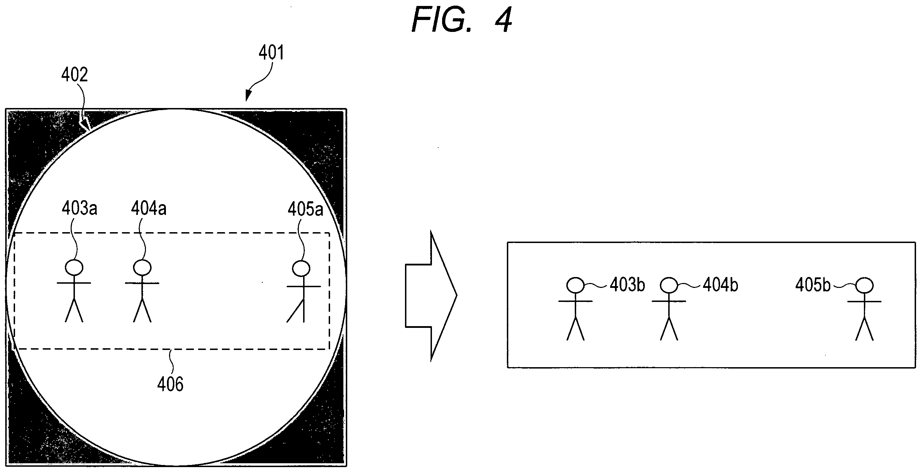

In the example illustrated in FIG. 1, the image whose resolution has been converted can be output from the resolution converting unit 102 to the installation direction obtaining unit 103 so that the image processing apparatus 100 can automatically obtain the installation direction of the camera from the image obtained by the image obtaining unit 101. Specifically speaking, for example, to the image obtained for the first time by the image obtaining unit 101, the resolution converting unit 102 outputs the image converted to a resolution lower than that of the image which is output to the distortion correcting unit 105 to the installation direction obtaining unit 103. The installation direction obtaining unit 103 determines the installation direction of the camera on the basis of a feature of the image which was output from the resolution converting unit 102. As a feature of the image, for example, a layout of a human body illustrated in each of the left diagrams of FIGS. 3 and 4, which will be described hereinafter, can be mentioned.

In the case of using such a construction as mentioned above, it is desirable that a detecting process of the human body in the recognition processing unit 106, which will be described hereinafter, is executed to the whole area of the image. It is sufficient to determine the installation direction of the camera once. Therefore, if the human body is detected from the image obtained for the first time by the image obtaining unit 101 and the installation direction of the camera is successfully determined, with respect to the images obtained at the second and subsequent times by the image obtaining unit 101, it is not always necessary to output them from the resolution converting unit 102 to the installation direction obtaining unit 103. If the human body is not detected from the image obtained for the first time and the installation direction of the camera cannot be obtained, the images are output from the resolution converting unit 102 to the installation direction obtaining unit 103 until the installation direction of the camera can be obtained.

It is not always necessary that the resolution of the image which is output to the installation direction obtaining unit 103 is lower than the resolution of the image which is output to the distortion correcting unit 105. For example, the image of the same resolution as that of the image which is output to the distortion correcting unit 105 may be output to the installation direction obtaining unit 103. The image which is obtained by the installation direction obtaining unit 103 is not limited to the image obtained for the first time by the image obtaining unit 101. When the user manually sets the installation direction of the camera to the image processing apparatus 100, it is not always necessary that the installation direction obtaining unit 103 obtains the image from the resolution converting unit 102.

In accordance with the installation direction of the camera, the human body detection priority area determining unit 104 determines an area where the detecting process of the human body as an example of a recognition target is started. In the description of the embodiment, such an area is referred to as a "priority area" in accordance with necessity. As mentioned above, in the embodiment, a raster scan is not performed from an edge of the whole pickup image but the detecting process of the human body is started from the priority area according to the installation direction of the camera. In the embodiment, the priority area determined every installation direction of the camera from characteristics of the image which is photographed through the fisheye lens is previously stored in the image processing apparatus 100. The human body detection priority area determining unit 104 determines the priority area stored in association with the installation direction of the camera as a priority area according to the installation direction of the camera.

To the whole area of the image whose resolution has been converted by the resolution converting unit 102, the distortion correcting unit 105 executes a distortion correcting process suitable to the installation direction of the camera. In the embodiment, a method of the distortion correcting process determined every installation direction of the camera is previously stored in the image processing apparatus 100. To the image whose resolution has been converted by the resolution converting unit 102, the distortion correcting unit 105 executes the distortion correcting process of the method stored in association with the installation direction of the camera obtained by the installation direction obtaining unit 103.

The recognition processing unit 106 executes a detecting process of the human body (recognizing process) from the priority area determined by the human body detection priority area determining unit 104 in the whole area of the image obtained after the distortion correcting process was executed by the distortion correcting unit 105. For example, the recognition processing unit 106 can execute the detecting process of the human body by using a well-known image recognizing process such as a method whereby the feature amount of the image and the feature amounts of the human bodies which have previously been registered are compared, thereby extracting the area of the human body, or the like.

A result of the detection of the human body by the recognition processing unit 106 is delivered to the outside or is recorded to a recording device or the like by the delivering/recording unit 107 together with the image obtained by the image obtaining unit 101, the image whose resolution has been converted by the resolution converting unit 102, or the image whose distortion has been corrected by the distortion correcting unit 105. Both of the delivery and the recording may be performed.

The controlling unit 108 is constructed by a CPU or the like and integratedly controls the whole image processing apparatus 100. The recognition processing unit 106 can function as a detecting unit and a detecting process by the detecting unit is also executed in accordance with the control by the controlling unit 108.

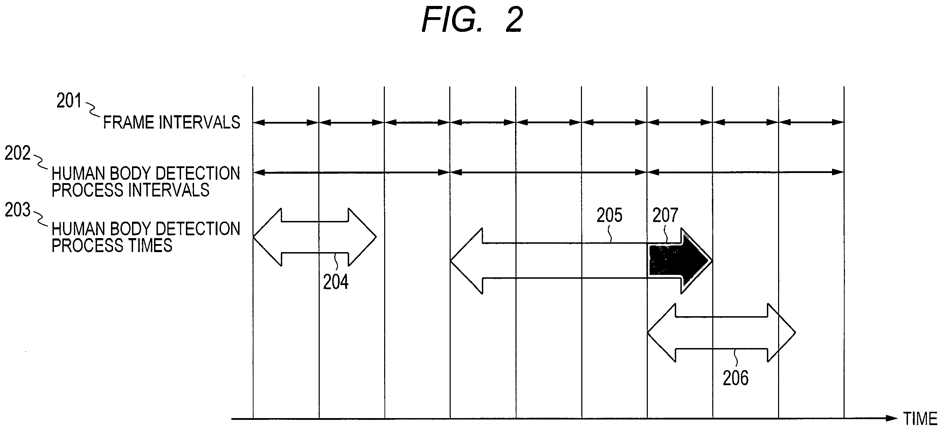

FIG. 2 is a diagram illustrating an example of relations among frame intervals of the image, human body detection process intervals, and human body process times.

Frame intervals 201 of the image indicate frame intervals of the image obtained by the image obtaining unit 101. That is, in the example illustrated in FIG. 2, the image obtaining unit 101 obtains images at such frame intervals.

Human body detection process intervals 202 indicate intervals of the detecting process of the human body. In the example illustrated in FIG. 2, the detection of the human body on one image is executed at the frame intervals 201 of three frames (time which is required to obtain images of three frames). In the example illustrated in FIG. 2, the recognition processing unit 106 executes the recognizing process of the human body at the human body detection process intervals 202.

Human body process times 203 indicate times which are required for the detecting process of the human body. Times 204, 205, and 206 are examples of a time which is required for the detecting process of the human body. As shown in the times 204, 205, and 206, the time which is required for the detecting process of the human body differs remarkably in dependence on a degree of complication of the image or the number of existing human bodies. For example, as shown in the time 204, there is a case where the detecting process of the human body ends at the frame intervals 201 of two frames. On the other hand, as shown in the time 205, there is a case where the detecting process of the human body does not end even at the frame intervals 201 of three frames.

Therefore, when an image processing system is made operative in a real time, it is operated as follows. That is, if the detecting process of the human body does not end at the predetermined human body detection process intervals 202 (predetermined frame intervals), the detecting process of the human body is stopped at such a point of time (refer to a boundary line between black and white shown in the time 205) and the detecting process of the next human body is started (refer to the time 206). Therefore, in a remaining time 207 of the time 205 during which the detecting process of the human body should be executed, the detecting process of the human body is not executed in order to stop the detecting process of the human body. Thus, the human body which should be detected in the remaining time 207 is not detected. This exerts an influence on a detection precision of the human body and becomes a cause of deterioration of the detection precision of the human body.

In order to keep the detection precision of the human body and further enable the operation of the real time, if a large number of human bodies can be detected in a start portion of a detecting process period of time of the human body, even if the detecting process of the human body is stopped, the process in the real time can be performed without largely deteriorating the detection precision of the human body. Therefore, in the image processing apparatus of the embodiment, the priority area where a larger number of human bodies can be detected is determined by the human body detection priority area determining unit 104 and the detecting process of the human body is executed preferentially from the determined priority area.

The human body detection priority area determining unit 104 determines the area where a larger number of human bodies can be detected from characteristics of the image photographed through the fisheye lens. In the image photographed through the fisheye lens, the area where the human body is detected differs in dependence on the installation direction of the camera. By determining the area where the detecting process of the human body is preferentially executed every installation direction by using such a feature, a larger number of human bodies can be detected in the start portion of the detecting process period of time of the human body.

FIG. 3 is a diagram conceptually illustrating an example of a pickup image in the case where the camera having the fisheye lens has been installed to the ceiling and an image obtained by developing the pickup image. FIG. 4 is a diagram conceptually illustrating an example of a pickup image in the case where the camera having the fisheye lens has been installed to the wall surface (side wall) and an image obtained by developing the pickup image.

First, an example of the developing process of the image and the recognizing process of the human body in the case where the camera has been installed to the ceiling will be described with reference to FIG. 3.

In a left diagram of FIG. 3 (diagram on the left side than a white-on-black arrow line), a pickup image 301 is an image which is output from the camera having the fisheye lens. An annulus ring image 302 is an image which is photographed by the camera having the fisheye lens. Human bodies 303a, 304a, and 305a are displayed in the annulus ring image 302. When the camera having the fisheye lens has been installed to the ceiling, in a central part 306 of the annulus ring image 302, since a head portion and shoulder portions of the human body are photographed by the photographing from a position over the human body, it is difficult that they are detected as a human body. Consequently, when the camera has been installed to the ceiling, the human body is detected almost in an area between the central part 306 and a circumferential part 307 of the annulus ring image 302.

On the other hand, when the camera having the fisheye lens has been installed to the ceiling, like human bodies 303a, 304a, and 305a illustrated in the left diagram of FIG. 3, there is such a feature that the human bodies are radially detected on the annulus ring image 302. As illustrated in the left diagram of FIG. 3, when the camera has been installed to the ceiling, the human bodies are easily detected in the area between the central part 306 and the circumferential part 307 of the annulus ring image 302.

Therefore, the human body detection priority area determining unit 104 determines, for example, such an area as a priority area. As mentioned above, in the embodiment, the distortion correcting unit 105 executes a distortion correcting process to the whole area of the annulus ring image 302 illustrated in the left diagram of FIG. 3. Specifically speaking, as illustrated in a right diagram of FIG. 3 (diagram on the right side than the white-on-black arrow line), the distortion correcting unit 105 executes a double panoramic development to the whole area of the annulus ring image 302 illustrated in the left diagram of FIG. 3. The distortion correcting unit 105 can function as a developing unit.

As mentioned above, the right diagram of FIG. 3 shows an image obtained by double-panoramic-developing the annulus ring image 302 illustrated in the left diagram of FIG. 3. Human bodies 303b, 304b, and 305b are human bodies obtained by developing the human bodies 303a, 304a, and 305a, respectively.

The recognition processing unit 106 executes the detecting process of the human body to the image which was double-panoramic-developed as mentioned above. At this time, the recognition processing unit 106 executes the detecting process of the human body from the priority area determined by the human body detection priority area determining unit 104 in the area of the double-panoramic-developed image. As mentioned above, to the area of the double-panoramic-developed image, by preferentially executing the detecting process of the human body to the priority area than the other area, a larger number of human bodies can be detected in the start portion of the period of time of the detecting process of the human body. Thus, even if the detecting process of the human body is stopped, the precision of the detecting process of the human body can be held.

In the embodiment, the developing method has been described as an example with respect to the case where the annulus ring image 302 is double panoramic developed. However, any other developing method may be used so long as a developing method suitable for the case where the camera has been installed to the ceiling.

In the embodiment, the case where the whole area of the annulus ring image 302 is double panoramic developed has been described as an example. By using such a method, for example, the double-panoramic-developed image can be used for a use other than the detecting process of the human body. However, for example, in the case where the double-panoramic-developed image is used only for the detecting process of the human body, only the priority area determined by the human body detection priority area determining unit 104 in the area of the annulus ring image 302 may be double panoramic developed. In the case of using such a method, information showing the priority area is output from the human body detection priority area determining unit 104 to the distortion correcting unit 105 instead of the recognition processing unit 106. Since the area of the double-panoramic-developed image is only the priority area, the recognition processing unit 106 executes the detecting process of the human body to the whole area of such an image. Further, even when the detecting process of the human body is ended, if the detecting process of the human body is not stopped, for example, the other area in the area of the annulus ring image 302 is double panoramic developed and the detecting process of the human body can be executed to the double-panoramic-developed image.

Subsequently, an example of the developing process of the image and the recognizing process of the human body in the case where the camera has been installed to the wall surface (side wall) will be described with reference to FIG. 4.

In a left diagram of FIG. 4 (diagram on the left side than a white-on-black arrow line), a pickup image 401 is an image which is output from the camera having the fisheye lens. An annulus ring image 402 is an image which is photographed by the camera having the fisheye lens. Human bodies 403a, 404a, and 405a are displayed in the annulus ring image 402. When the camera having the fisheye lens has been installed to the wall surface, the human body is detected in a central part 406 of the annulus ring image 402. Since the area of an upper part or a lower part of the annulus ring image 402 is the ceiling or floor surface, a possibility that the human body exists in such an area is low.

As mentioned above, when the camera has been installed to the wall surface, the human body is easily detected in the central part 406 of the annulus ring image 402. Therefore, for example, the human body detection priority area determining unit 104 determines this area as a priority area. As mentioned above, in the embodiment, the distortion correcting unit 105 executes the distortion correcting process to the whole area of the annulus ring image 402 illustrated in the left diagram of FIG. 3. Specifically speaking, the distortion correcting unit 105 panoramic develops the whole area of the annulus ring image 402 illustrated in the left diagram of FIG. 4 as shown in a right diagram of FIG. 4 (diagram on the right side than the white-on-black arrow line).

As mentioned above, the right diagram of FIG. 4 shows an image obtained by panoramic developing the annulus ring image 402 illustrated in the left diagram of FIG. 4. Human bodies 403b, 404b, and 405b are human bodies obtained by developing the human bodies 403a, 404a, and 405a, respectively.

The recognition processing unit 106 executes the detecting process of the human body to the image which was panoramic developed as mentioned above. At this time, the recognition processing unit 106 executes the detecting process of the human body from the priority area determined by the human body detection priority area determining unit 104 in the area of the panoramic-developed image. As mentioned above, to the area of the panoramic-developed image, by preferentially executing the detecting process of the human body to the priority area than the other area, a larger number of human bodies can be detected in the start portion of the period of time of the detecting process of the human body. Thus, even if the detecting process of the human body is stopped, the precision of the detecting process of the human body can be held.

In the embodiment, the developing method has been described as an example with respect to the case where the area is panoramic developed. However, any other developing method may be used so long as a developing method suitable for the case where the camera has been installed to the wall surface.

In the embodiment, the case where the whole area of the annulus ring image 402 is panoramic developed has been described as an example. However, for example, only the priority area determined by the human body detection priority area determining unit 104 in the area of the annulus ring image 402 may be panoramic developed in a manner similar to the case described with reference to FIG. 3.

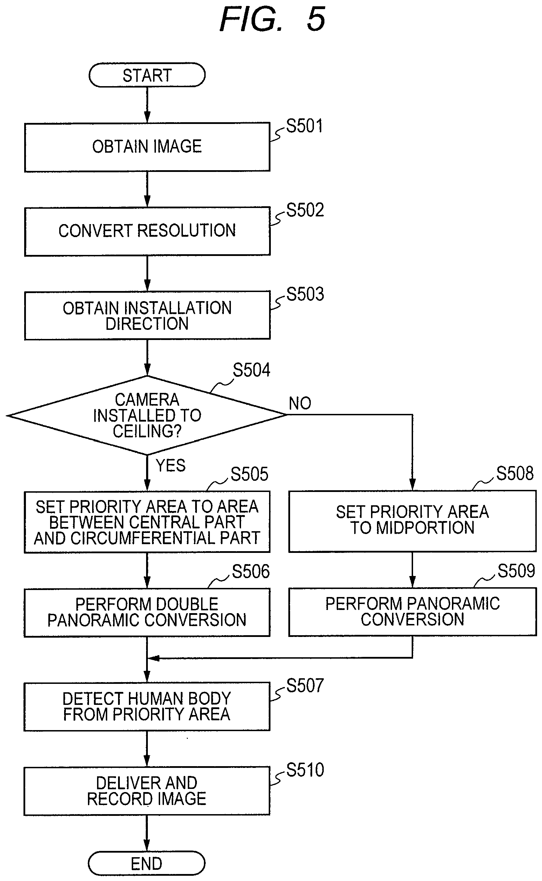

Subsequently, an example of the operation of the image processing apparatus 100 of the embodiment for realizing the foregoing operation will be described with reference to a flowchart of FIG. 5.

First, in S501, the image obtaining unit 101 obtains the image photographed through the fisheye lens and stores into an internal frame memory. The image stored in the frame memory is sent to the resolution converting unit 102.

Subsequently, in S502, the resolution converting unit 102 converts the image obtained by the image obtaining unit 101 into an image of a resolution and a frame rate which are suitable for a process (delivery or recording) at a post stage. The image converted to the image of the resolution and frame rate suitable for the process of the post stage is sent to the installation direction obtaining unit 103, distortion correcting unit 105, and delivering/recording unit 107 at the post stage.

Subsequently, in S503, the installation direction obtaining unit 103 obtains the information of the installation direction of the camera. As mentioned above, in the embodiment, as for the installation direction of the camera, the camera has been installed to the ceiling or the wall surface. As mentioned above, the installation direction of the camera may be automatically discriminated from the pickup image or may be discriminated from the information which has been preset by the user. The information of the installation direction of the camera is sent to the human body detection priority area determining unit 104 and the distortion correcting unit 105.

Subsequently, in S504, the human body detection priority area determining unit 104 discriminates whether or not the camera has been installed to the ceiling on the basis of the information of the installation direction of the camera. As a result of the discrimination, if the camera has been installed to the ceiling, the processing routine advances to S505. If the camera is not installed to the ceiling, that is, if the camera has been installed to the wall surface, the processing routine advances to S508.

First, in S505, the human body detection priority area determining unit 104 sets the priority area to the area between the central part 306 and the circumferential part 307 of the annulus ring image 302 (refer to the left diagram of FIG. 3). The information showing the set priority area is sent to the recognition processing unit 106.

Subsequently, in S506, the distortion correcting unit 105 performs the double panoramic conversion to the annulus ring image 302 as a distortion correction of the image in the case where the camera has been installed to the ceiling (refer to the right diagram of FIG. 3). The double-panoramic-converted image is sent to the recognition processing unit 106.

Subsequently, in S507, the recognition processing unit 106 executes the detecting process of the human body from the priority area set in S505 in the area of the image which was double panoramic converted in S506. Even if the detecting process of the human body in the priority area was ended, when the time corresponding to the human body detection process intervals 202 does not elapse, the recognition processing unit 106 executes the detecting process of the human body to the other area of the image which was double panoramic converted in S506. A result of the detection is sent to the delivering/recording unit 107. The processing routine advances to S510, which will be described hereinafter. The detecting processes of the human body to the priority area and the other area are executed, for example, in raster scanning order.

As mentioned above, in S504, if it is determined that the camera is not installed to the ceiling (the camera has been installed to the wall surface), the processing routine advances to S508. In S508, the human body detection priority area determining unit 104 sets the priority area to a central part 406 of the annulus ring image 402 (refer to the left diagram of FIG. 4). The information showing the set priority area is sent to the recognition processing unit 106.

Subsequently, in S509, the distortion correcting unit 105 performs the panoramic conversion to the annulus ring image 402 as a distortion correction of the image in the case where the camera has been installed to the wall surface (refer to the right diagram of FIG. 4). The panoramic-converted image is sent to the recognition processing unit 106.

As mentioned above, S507 follows and the recognition processing unit 106 executes the detecting process of the human body from the priority area set in S508 in the area of the image which was panoramic converted in S509. Even if the detecting process of the human body in the priority area was ended, when the time corresponding to the human body detection process intervals 202 does not elapse, the recognition processing unit 106 executes the detecting process of the human body to the other area of the image which was panoramic converted in S509. A result of the detection is sent to the delivering/recording unit 107. The processing routine advances to S510. The detecting processes of the human body to the priority area and the other area are executed, for example, in raster scanning order.

In the foregoing example, even if the detecting process of the human body in the priority area was ended, when the time corresponding to the human body detection process intervals 202 does not elapse, the detecting process of the human body is executed to the other area (refer to the description of S507). Even in such a case, the detecting process of the human body in the other area may not be executed.

In S510, the delivering/recording unit 107 delivers or records the result of the recognition in the recognition processing unit 106 and the image converted into the image of the resolution and frame rate suitable for delivery or recording in the resolution converting unit 102. The process by the flowchart of FIG. 5 is ended.

As mentioned above, in the embodiment, the area where the relatively large number of human bodies are detected in the area of the image to be photographed is set as a priority area in accordance with the installation direction of the camera. The detecting process of the human body is preferentially started from the set priority area. Therefore, even in a real-time process in which the human body detection process intervals 202 are short, the human body can be efficiently detected without largely deteriorating the detection precision.

In the embodiment, the case where the installation direction of the camera is limited to the ceiling or the wall surface has been described as an example. However, the installation direction of the camera is not limited to those two directions. The area where the relatively large number of human bodies are detected is determined from the feature on the image in an arbitrary installation direction of the camera, the determined area is assumed to be the priority area corresponding to the installation direction, and the detecting process of the human body can be also executed.

In the embodiment, the case where the recognition processing unit 106 executes the detecting process of the human body has been described as an example. However, the detection target is not limited to the human body. For example, it is sufficient that an individual can be identified by the detecting process. For example, the detecting process of the face or the like may be executed.

In the embodiment, the case where the priority area is set has been described as an example. However, if the position where the distortion correction is started can be designated, it is not always necessary to use such a method. For example, the first pixel in the raster scanning order in the priority area may be designated. According to the construction of the image processing apparatus 100 of the embodiment, the recognition target on the image photographed by using the wide-angle image pickup unit can be efficiently detected.

### <Second Embodiment>

Subsequently, the second embodiment will be described.

In the embodiment, the position (priority area) where the detecting process of the human body is started is set in accordance with the installation direction of the camera and a result of a moving body detection. As mentioned above, the second embodiment and the first embodiment mainly differ with respect to a part of the method of setting the position (priority area) where the detecting process of the human body is started. Therefore, in the description of the embodiment, substantially the same portions as those in the first embodiment are designated by the same reference numerals as those shown in FIGS. 1 to 5 and their detailed description is omitted.

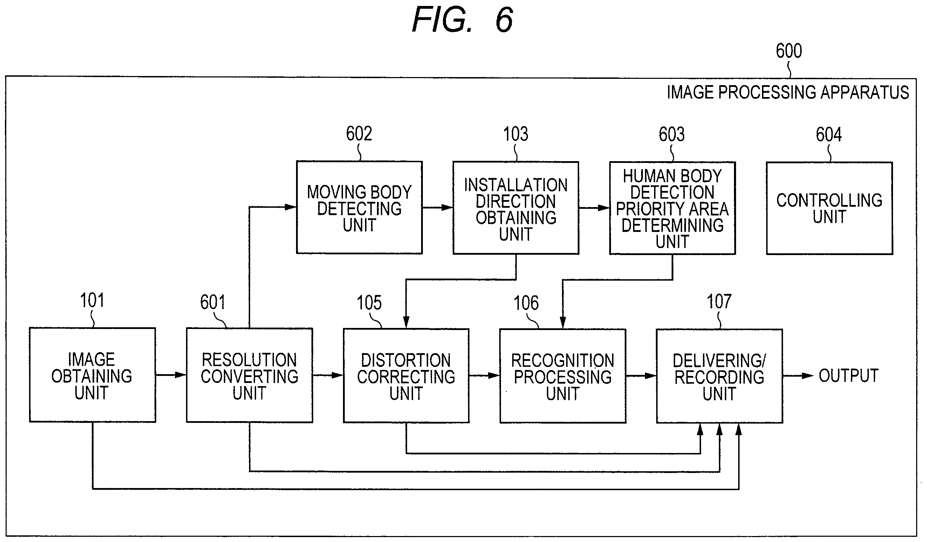

In FIG. 6, an image processing apparatus 600 has the image obtaining unit 101, the installation direction obtaining unit 103, the distortion correcting unit 105, the recognition processing unit 106, the delivering/recording unit 107, a resolution converting unit 601, a moving body detecting unit 602, a human body detection priority area determining unit 603 (hereinbelow, referred to as a priority area determining unit 603), and a controlling unit 604. The image obtaining unit 101, installation direction obtaining unit 103, distortion correcting unit 105, recognition processing unit 106, and delivering/recording unit 107 are substantially the same as those illustrated in FIG. 1.

In a manner similar to the resolution converting unit 102 in the first embodiment, the resolution converting unit 601 converts the image obtained by the image obtaining unit 101 into an image of a low resolution for image analysis or into an image of a resolution suitable for delivery. The resolution converting unit 601 performs not only the conversion of the resolution but also a conversion of the frame rate in accordance with necessity.

In the first embodiment, it is sufficient that the resolution converting unit 102 outputs the resolution-converted image to the installation direction obtaining unit 103 only with respect to the image until the installation direction of the camera is obtained by the installation direction obtaining unit 103. On the other hand, the resolution converting unit 601 in the embodiment outputs the resolution-converted image to the moving body detecting unit 602 with respect to, for example, the image of each frame obtained by the image obtaining unit 101. This is because the image of each frame is necessary to detect a moving body in the moving body detecting unit 602, which will be described hereinafter.

The resolution converting unit 601 outputs the image of a resolution lower than that of the image which is output to the distortion correcting unit 105 to the moving body detecting unit 602. In the first embodiment, it is sufficient that the image is output from the resolution converting unit 102 to the installation direction obtaining unit 103 until the installation direction obtaining unit 103 obtains the installation direction of the camera. On the other hand, in the embodiment, the image is output from the resolution converting unit 601 to the moving body detecting unit 602 every frame. Therefore, an effect of reduction of the process time which is obtained by outputting the image of the low resolution to the moving body detecting unit 602 according to the second embodiment is larger than that in the first embodiment. However, if the process time cab be assured, it is not always necessary that the resolution of the image which is output to the moving body detecting unit 602 is set to be lower than that of the image which is output to the distortion correcting unit 105. For example, the image of the same resolution as that of the image which is output to the distortion correcting unit 105 may be output to the moving body detecting unit 602.

The moving body detecting unit 602 detects a moving body such as a person or the like existing on the image whose resolution or the like has been converted by the resolution converting unit 601. The moving body can be detected by, for example, a background difference method. However, the moving body detecting method is not limited to the background difference method. For example, the moving body may be detected by using a moving vector. The moving body detecting unit 602 can function as a motion detecting unit.

The priority area determining unit 603 sets an area in which the area where the moving body obtained by the moving body detecting unit 602 exists and the area corresponding to the installation direction of the camera obtained by the installation direction obtaining unit 103 overlap. In the embodiment, such an overlap area is referred to as a "priority area" in accordance with necessity. The area corresponding to the installation direction of the camera obtained by the installation direction obtaining unit 103 is the priority area described in the first embodiment (the area which is decided from the feature on the image in the installation direction of the camera, that is, the area where the relatively large number of human bodies are detected). Specifically speaking, in the example illustrated in the left diagram of FIG. 3, such an area is an area between the central part 306 and the circumferential part 307 of the annulus ring image 302, and in the example illustrated in the left diagram of FIG. 4, such an area is an area of the central part 406 of the annulus ring image 402.

The controlling unit 604 is constructed by a CPU or the like and integratedly controls the whole image processing apparatus 600.

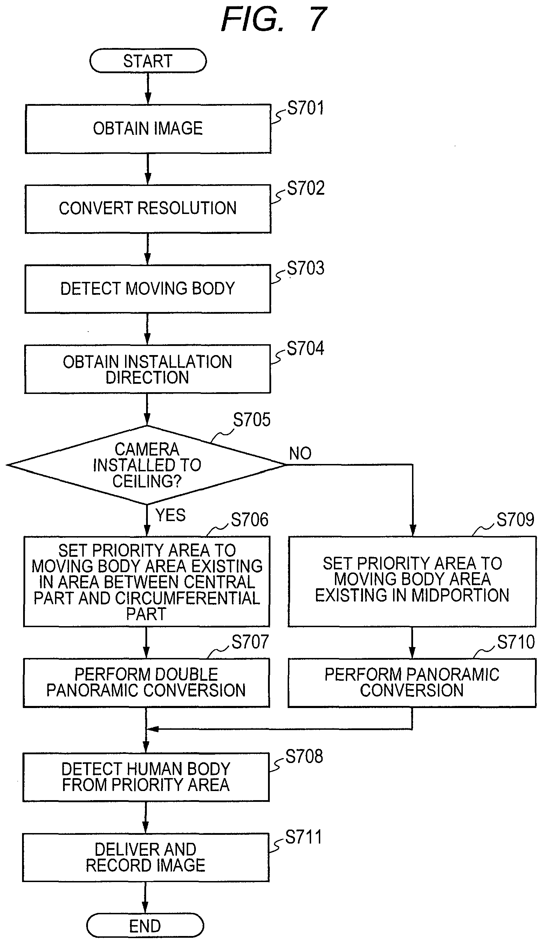

Subsequently, an example of the operation of the image processing apparatus 600 of the embodiment will be described with reference to a flowchart of FIG. 7.

First, in S701, the image obtaining unit 101 obtains the images photographed through the fisheye lens and stores into the internal frame memory. The images stored in the frame memory are sent to the resolution converting unit 601.

Subsequently, in S702, the resolution converting unit 601 converts the image obtained by the image obtaining unit 101 into an image of a resolution and a frame rate which are suitable for the process (delivery or recording) at the post stage. The image converted to the image of the resolution and frame rate suitable for the process of the post stage is sent to the moving body detecting unit 602, distortion correcting unit 105, and delivering/recording unit 107.

Subsequently, in S703, the moving body detecting unit 602 detects the moving body on the image which was output from the resolution converting unit 601. A result of the detection is sent to the priority area determining unit 603 through the installation direction obtaining unit 103.

Subsequently, in S704, the installation direction obtaining unit 103 obtains the information of the installation direction of the camera. Also in the embodiment, in a manner similar to the case shown in the flowchart of FIG. 5 described in the first embodiment, a case where the installation direction of the camera is a direction in which the camera has been installed to the ceiling or a direction in which the camera has been installed to the wall surface will be described as an example. As described in the first embodiment, the installation direction obtaining unit 103 may automatically discriminate the installation direction of the camera from the pickup image or may discriminate it from the information which is previously manually set by the user. The information of the obtained installation direction of the camera is sent to the priority area determining unit 603 and the distortion correcting unit 105.

Subsequently, in S705, on the basis of the information of the installation direction of the camera, the priority area determining unit 603 discriminates whether or not the camera has been installed to the ceiling. As a result of the discrimination, if the camera has been installed to the ceiling, the processing routine advances to S706. If the camera is not installed to the ceiling, that is, if the camera has been installed to the wall surface, the processing routine advances to S709.

First, in S706, on the basis of the detection result of the moving body and the installation direction of the camera, the priority area determining unit 603 sets the priority area. In this instance, since the camera has been installed to the ceiling, the human body is easily detected in the area between the central part 306 and the circumferential part 307 of the annulus ring image 302 illustrated in FIG. 3. Therefore, from the detection result of the moving body, the priority area determining unit 603 sets the area of the moving body, as a priority area, existing in the area between the central part 306 and the circumferential part 307 of the annulus ring image 302. The information showing the set priority area is sent to the recognition processing unit 106.

Subsequently, in S707, the distortion correcting unit 105 executes the double panoramic conversion to the annulus ring image 302 as a distortion correction of the image in the case where the camera has been installed to the ceiling (refer to the right diagram of FIG. 3). The double-panoramic-converted image is sent to the recognition processing unit 106.

Subsequently, in S708, the recognition processing unit 106 executes the detecting process of the human body from the priority area set in S706 in the area of the image which was double panoramic converted in S707. Even if the detecting process of the human body in the priority area was ended, when the time corresponding to the human body detection process intervals 202 does not elapse, the recognition processing unit 106 executes the detecting process of the human body to the other area of the image which was double panoramic converted in S707. A result of the detection is sent to the delivering/recording unit 107. The processing routine advances to S711, which will be described hereinafter. The detecting processes of the human body to the priority area and the other area are executed, for example, in raster scanning order.

As mentioned above, in S705, if it is determined that the camera is not installed to the ceiling (the camera has been installed to the wall surface), the processing routine advances to S709. In S709, the priority area determining unit 603 sets the priority area on the basis of the detection result of the moving body and the installation direction of the camera. In this instance, since the camera has been installed to the wall surface, the human body is easily detected in the area of in the central part 406 of the annulus ring image 402 illustrated in FIG. 4. Therefore, from the detection result of the moving body, the priority area determining unit 603 sets the area, as a priority area, of the moving body existing in the area of in the central part 406 of the annulus ring image 402. The information showing the set priority area is sent to the recognition processing unit 106.

Subsequently, in S710, the distortion correcting unit 105 executes the panoramic conversion to the annulus ring image 402 as a distortion correction of the image in the case where the camera has been installed to the wall surface (refer to the right diagram of FIG. 4). The panoramic-converted image is sent to the recognition processing unit 106 and S708 follows.

As mentioned above, the processing routine advances to S708 and the recognition processing unit 106 executes the detecting process of the human body from the priority area set in S709 in the area of the image which was panoramic converted in S710. Even if the detecting process of the human body in the priority area was ended, when the time corresponding to the human body detection process intervals 202 does not elapse, the recognition processing unit 106 executes the detecting process of the human body to the other area of the image which was panoramic converted in S710. A result of the detection is sent to the delivering/recording unit 107. The processing routine advances to S711. The detecting processes of the human body to the priority area and the other area are executed, for example, in raster scanning order.

In S711, the delivering/recording unit 107 delivers or records the result of the recognition in the recognition processing unit 106 and the image which was output from the resolution converting unit 601. The process by the flowchart of FIG. 5 is ended.

As mentioned above, in the embodiment, on the basis of the installation direction of the camera and the detection result of the moving body in the image, in the area where the relatively large number of human bodies are detected in the area of the image to be photographed, the area of the moving body is set as a priority area. The detecting process of the human body is preferentially started from the set priority area. Therefore, the moving body can be more preferentially detected. Thus, even in the real-time process in which the human body detection process intervals 202 are short, the human body can be efficiently detected without largely deteriorating the detection precision.

Even in the embodiment, the various modifications described in the first embodiment can be used. For example, the installation direction of the camera is not limited to the foregoing two directions. Also in the embodiment, the area where the relatively large number of human bodies are detected is determined from the feature on the image in an arbitrary installation direction of the camera, the area of the moving body in the determined area is assumed to be the priority area corresponding to the installation direction, and the detecting process of the human body can be also executed.

The detection target is not limited to the human body. For example, it is sufficient that an individual can be identified by the detecting process. For example, the detecting process of the face or the like may be executed.

As another method, the distortion correction is performed to the priority area in the area of the image whose resolution or the like has been converted by the resolution converting unit 601 and the detecting process of the human body may be executed to the image to which the distortion correction has been performed. If the position where the distortion correction is started can be designated, the priority area (itself) may not be set. According to the construction of the image processing apparatus 100 of the embodiment, the recognition target on the image photographed by using the wide-angle image pickup unit can be efficiently detected.

### <Third Embodiment>

Subsequently, the third embodiment will be described.

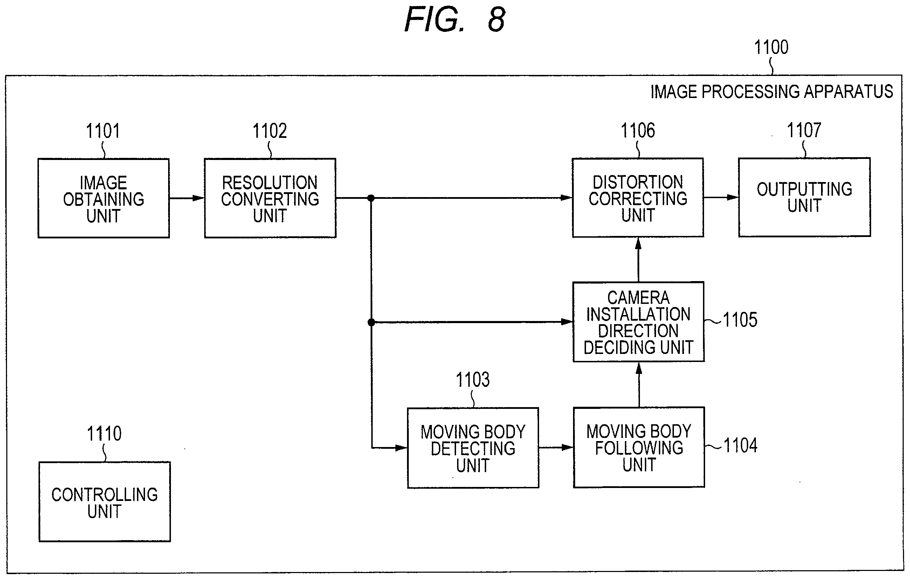

FIG. 8 is a block diagram illustrating an example of the construction of an image processing apparatus 1100 of the embodiment.

In FIG. 8, the image processing apparatus 1100 has an image obtaining unit 1101, a resolution converting unit 1102, a moving body detecting unit 1103, a moving body following unit 1104, a camera installation direction deciding unit 1105 (hereinbelow, referred to as a "direction deciding unit 1105"), a distortion correcting unit 1106, and an outputting unit 1107.

The image obtaining unit 1101 has: a fisheye lens; an image pickup device for photographing an image through the fisheye lens; and a frame memory. The image photographed through the fisheye lens is temporarily stored in the frame memory and is sent to the resolution converting unit 1102 at a predetermined frame rate. As mentioned above, in the embodiment, a case where the image processing apparatus 1100 is an image pickup apparatus will be described as an example. In the following description, the image processing apparatus 1100 is referred to as a "camera" in accordance with necessity. The image obtaining unit 1101 having the fisheye lens may be provided as an image pickup apparatus in the outside of the image processing apparatus 1100. If such a construction as mentioned above is used, the image processing apparatus 1100 obtains the image photographed through the fisheye lens from the image pickup apparatus.

In the embodiment, it is assumed that the image obtained by the image obtaining unit 1101 has a high resolution. Therefore, it is necessary that the resolution converting unit 1102 converts the resolution and the frame rate of the image obtained by the image obtaining unit 1101 into a resolution and a frame rate which are suitable for the process at the post stage. If the conversion of the resolution is unnecessary in the process at the post stage, it is not always necessary that the resolution converting unit 1102 performs the conversion of the image.

The image whose resolution and frame rate have been converted is sent to the moving body detecting unit 1103, camera installation direction deciding unit 1105, and distortion correcting unit 1106, respectively. The resolutions and the frame rates of those images may be identical or different.

The moving body detecting unit 1103 detects a moving body (object to be photographed) such as a person or the like existing on the image. The moving body can be detected by, for example, the background difference method. However, the moving body detecting method is not limited to the background difference method. For example, the moving body may be detected by using the moving vector. The moving body detecting unit 1103 outputs a body detection result including a position on a display screen of the detected body, a circumscribed rectangle of the body, and a size of the body.

The moving body following unit 1104 executes a following process of the moving body by making the body detected at a previous frame and the body detected at the present frame correspond to each other. The moving body following unit 1104 newly adds a peculiar following ID to the body which was newly detected. To the body which was made to correspond to the body detected at the previous frame, the moving body following unit 1104 adds the same following ID as the following ID added to the body detected at the previous frame.

The moving body following unit 1104 outputs a following track of the body. The following track is information including a position, a size, and a speed on the display screen of the body and a correspondence state (following ID) with the body detected at the previous frame. Further, the moving body following unit 1104 predicts a position at the present frame of the body from the position, size, and speed of the body included in the following track at the previous frame. The moving body following unit 1104 extracts the body existing near the predicted position on the screen on the basis of the body detection result which was output from the moving body detecting unit 1103 and makes the body at the previous frame and the body at the present frame correspond to each other. Specifically speaking, the moving body following unit 1104 adds the same following ID as that of the body at the previous frame corresponding to such a body to the body at the present frame..

The direction deciding unit 1105 maps a moving body following result which was output from the moving body following unit 1104 onto the image whose resolution and frame rate have been converted. From a feature of a way of display (based on characteristics of the lens) of the body on the image of the body which is being followed by the moving body following unit 1104, the direction deciding unit 1105 discriminates whether the camera has been installed in the vertical direction or the perpendicular direction. In the embodiment, from relations between the positions and sizes at different frames of the body which is being followed by the moving body following unit 1104, the direction deciding unit 1105 discriminates whether the camera has been installed in the vertical direction or the perpendicular direction. Further, the direction deciding unit 1105 outputs information showing a result of the discrimination to the distortion correcting unit 1106.

The vertical direction denotes a direction in which the central optical axis of the image pickup apparatus and the horizontal surface (ground surface or ceiling surface) cross perpendicularly. The perpendicular direction denotes a direction in which the central optical axis of the image pickup apparatus and the horizontal surface (ground surface or ceiling surface) are parallel.

In accordance with the installation direction of the camera decided by the direction deciding unit 1105, the distortion correcting unit 1106 performs the distortion correction and the developing process to the image which was input from the resolution converting unit 1102. The distortion correcting unit 1106 outputs the image to which the distortion correction and the developing process have been performed to the outputting unit 1107. If the installation direction of the camera is the vertical direction, for example, the distortion correcting unit 1106 double panoramic converts the image and outputs to the outputting unit 1107. If the installation direction of the camera is the perpendicular direction, for example, the distortion correcting unit 1106 panoramic converts the midportion of the image and outputs to the outputting unit 1107.

The outputting unit 1107 outputs the image which was output from the distortion correcting unit 1106. An outputting form by the outputting unit 1107 is, for example, at least one of the delivery to the outside of the camera, the recording to a recording apparatus out of the camera, and the recording to a media built in the camera. The outputting unit 1107 may output (deliver, record) the information of the installation direction of the camera and the information showing the contents of the distortion correction and the developing process together with the image. A controlling unit 1110 is constructed by a CPU or the like and integratedly controls the whole image processing apparatus 1100.

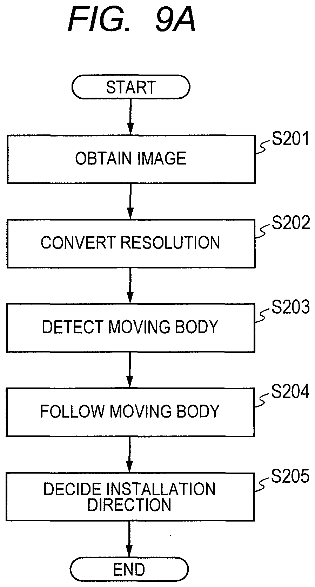

Subsequently, an example of a flow for processes of the image processing apparatus 1100 at the time of discriminating the installation direction of the camera will be described with reference to a flowchart of FIG. 9A.

In S201, the image obtaining unit 1101 obtains the image photographed by using the fisheye lens and stores into the internal frame memory.

Subsequently, in S202, the resolution converting unit 1102 converts the image obtained by the image obtaining unit 1101 into an image of a resolution and a frame rate which are suitable for the process at the post stage.

Subsequently, in S203, the moving body detecting unit 1103 detects a moving body included in the image which was output from the resolution converting unit 1102 by, for example, the background difference method.

Subsequently, in S204, the moving body following unit 1104 executes a moving body following process on the basis of the moving body detected by the moving body detecting unit 1103.

Subsequently, in S205, the direction deciding unit 1105 discriminates the installation direction of the camera on the basis of the image which was output from the resolution converting unit 1102 and a result of the moving body following process in S204. The direction deciding unit 1105 stores the installation direction of the camera. The process by the flowchart of FIG. 9A is ended.

An example of a method of discriminating the installation direction of the camera in S205 will be described hereinbelow.

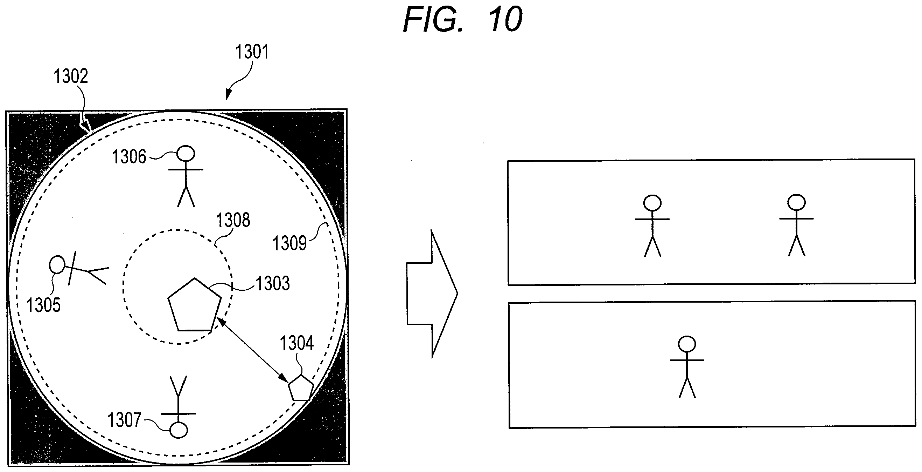

FIG. 10 is a diagram conceptually illustrating an example of the pickup image in the case where the installation direction of the camera is the vertical direction and the image obtained by double panoramic converting the pickup image.

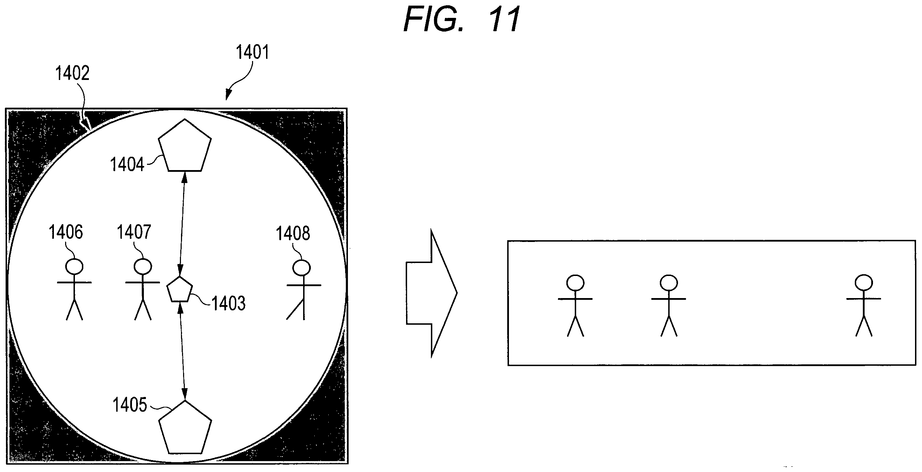

FIG. 11 is a diagram conceptually illustrating an example of the pickup image in the case where the installation direction of the camera is the perpendicular direction and the image obtained by panoramic converting a midportion of such an image.

In FIGS. 10 and 11, characteristic sizes and directions of moving bodies in pickup images 1301 and 1401 photographed by using the fisheye lens are shown.

In FIG. 10, an annulus ring image 1302 is an image area in which objects are displayed. A polygonal object 1303 is displayed near the center of the annulus ring image 1302. A polygonal object 1304 is displayed near an outer circumferential part of the annulus ring image 1302. It is assumed that sizes in a real space of the polygonal objects 1303 and 1304 are equal. Three human bodies 1305, 1306, and 1307 are displayed in the annulus ring image 1302.

In FIG. 11, an annulus ring image 1402 is an image area in which objects are displayed. A polygonal object 1403 is displayed near the center of the annulus ring image 1402. A polygonal object 1404 is displayed in an upper part of the annulus ring image 1402. A polygonal object 1405 is displayed in a lower part of the annulus ring image 1402. It is assumed that sizes in a real space of the polygonal objects 1403, 1404, and 1405 are equal. Three human bodies 1406, 1407, and 1408 are displayed in the annulus ring image 1402.

Even if the objects photographed by using the fisheye lens are the same objects, they are photographed in different sizes in dependence on the positions where the objects were detected on the pickup images 1301 and 1401 (annulus ring images 1302 and 1402).

For example, when the installation direction of the camera is the vertical direction, like polygonal objects 1303 and 1304 illustrated in FIG. 10, since the polygonal object 1303 photographed near the center of the annulus ring image 1302 exists at a position near the camera, it is photographed larger than the polygonal object 1304. In other words, since the polygonal object 1304 photographed near the circumference of the annulus ring image 1302 is far away from the camera, it is photographed smaller than the polygonal object 1303.

On the other hand, when the installation direction of the camera is the perpendicular direction, as illustrated in FIG. 11, the polygonal object 1403 photographed near the center of the annulus ring image 1402 is photographed smaller than the polygonal objects 1404 and 1405 photographed in the upper part and the lower part (particularly, the lower part) of the annulus ring image 1402. In other words, since the polygonal object 1405 photographed in the lower part of the annulus ring image 1402 exists at a position near the camera, it is photographed larger than the polygonal object 1403 photographed near the center of the annulus ring image 1402. Although a possibility is actually not high, also with respect to the polygonal object 1404 photographed in the upper part of the annulus ring image 1402, since it is considered that it exists at a position near the camera, it is photographed larger than the polygonal object 1403 photographed near the center of the annulus ring image 1402.

By using such relations between the positions and the sizes in the pickup images (annulus ring images) of the photographed objects in dependence on the installation direction of the camera, the direction deciding unit 1105 discriminates whether or not the installation direction of the camera is the vertical direction or the perpendicular direction. Specifically speaking, the direction deciding unit 1105 discriminates how the sizes of the objects to which the same following ID has been allocated change at each position on the image from the position and size on the image of the object which are included in a following track including such a following ID. On the basis of a result of the discrimination, the direction deciding unit 1105 discriminates whether the installation direction of the camera is the vertical direction or the perpendicular direction.

For example, it is assumed that the object was photographed near the center of the image (annulus ring image) which is output from the resolution converting unit 1102 at certain timing. It is also assumed that the object was photographed near the outer circumferential part of the image (annulus ring image) which is output from the resolution converting unit 1102 at certain timing. In this case, when the size of object near the outer circumferential part of the image (annulus ring image) is smaller than the size of object near the center of the image (annulus ring image), the direction deciding unit 1105 determines that the installation direction of the camera is the vertical direction.

It is also assumed that the object was photographed near the center of the image (annulus ring image) which is output from the resolution converting unit 1102 at certain timing. It is also assumed that the object was photographed in the upper part or the lower part of the image (annulus ring image) which is output from the resolution converting unit 1102 at timing different from that of the image (annulus ring image). In this case, when the size of object in the upper part or the lower part of the image (annulus ring image) is larger than the size of object near the center of the image (annulus ring image), the direction deciding unit 1105 determines that the installation direction of the camera is the perpendicular direction.

In the embodiment, the direction deciding unit 1105 stores information showing the relation between the feature of the way of display based on the characteristics of the lens of the object in the image as mentioned above and the installation direction of the camera. Such a feature is decided by using the position of the object (in the embodiment, time-dependent changes of the positions and sizes in a plurality of frames of the same object). The installation direction of the camera is discriminated on the basis of the photographed image and the stored information. An inputting form of such information into the image processing apparatus 1100 is not limited. For example, such information may be input to the image processing apparatus 1100 by using a user interface of the image processing apparatus 1100 or may be transmitted from an external apparatus to the image processing apparatus 1100.

In the embodiment, the direction deciding unit 1105 sets a circular boundary line 1308 of a radius r1 in the case where the same position as that of the center of the annulus ring image 1302 is assumed to be the center to a portion in the annulus ring image 1302. The direction deciding unit 1105 identifies that the object in which at least a part (or all) of an area exists in (the central side of the image) the boundary line 1308 is the object near the center of the image (annulus ring image). The direction deciding unit 1105 sets a circular boundary line 1309 of a radius r2 (r2 > r1) in the case where the same position as that of the center of the annulus ring image 1302 is assumed to be the center to a just inside portion of the outer periphery of the annulus ring image 1302. The direction deciding unit 1105 identifies that the object in which a partial area overlaps with the boundary line 1309 is the object near the outer circumferential part of the image (annulus ring image). Although not shown, also with respect to the object in the upper part or the lower part of the image (annulus ring image), a boundary line to partition the area of the upper part and the area of the lower part of the annulus ring image 1402 is set and the object in the upper part or the lower part of the image (annulus ring image) can be identified by checking whether or not the object exists in the inside of the boundary line.

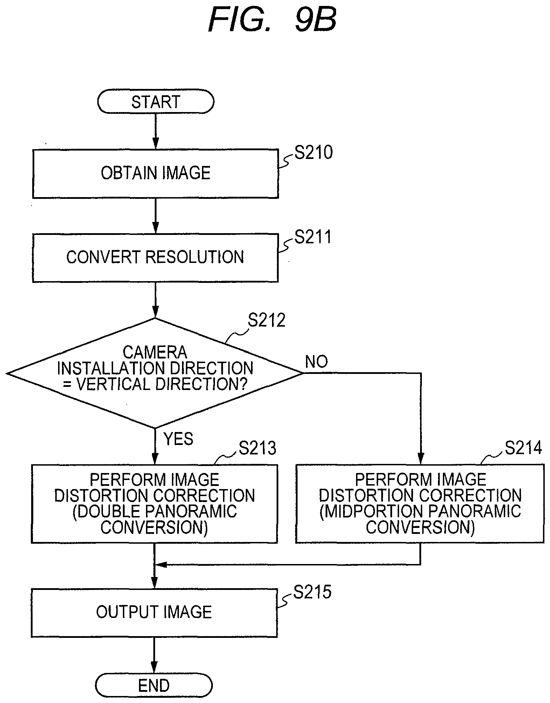

Subsequently, an example of a flow for the process of the image processing apparatus 1100 at the time of deciding a developing processing method of the image photographed by using the fisheye lens will be described with reference to a flowchart of FIG. 9B. The flowchart of FIG. 9B is executed after the installation direction of the camera was determined in the flowchart of FIG. 9A.

In S210, the image obtaining unit 1101 obtains the image photographed by using the fisheye lens and stores into the internal frame memory.

Subsequently, in S211, the resolution converting unit 1102 converts the image obtained by the image obtaining unit 1101 into an image of a resolution and a frame rate which are suitable for the process at the post stage.

Subsequently, in S212, the distortion correcting unit 1106 discriminates whether or not the installation direction of the camera is the vertical direction. As a result of the discrimination, if the installation direction of the camera is the vertical direction, S213 follows. If the installation direction of the camera is the perpendicular direction, S214 follows.

If it is determined that the installation direction of the camera is the vertical direction, S213 follows. The distortion correcting unit 1106 selects the double panoramic conversion, as a distortion correcting process, of the image (annulus ring image) which was output from the resolution converting unit 1102 and executes a converting process (refer to FIG. 10). The processing routine advances to S215, which will be described hereinafter.

The case of performing the double panoramic conversion has been mentioned here as an example. However, it is not always necessary that the converting process is limited to the double panoramic conversion so long as it is a process for correcting a distortion of the image by executing a converting process of the image (annulus ring image) suitable for the case where the installation direction of the camera is the vertical direction.

On the other hand, if it is determined that the installation direction of the camera is the perpendicular direction, S214 follows. The distortion correcting unit 1106 selects the panoramic conversion of a midportion, as a distortion correcting process, of the image (annulus ring image) which was output from the resolution converting unit 1102 and executes a converting process (refer to FIG. 11). The processing routine advances to S215, which will be described hereinafter.

The case of performing the panoramic conversion of the midportion of the image has been mentioned here as an example. However, the converting process is not limited to the panoramic conversion of the midportion of the image so long as it is a process for correcting a distortion of the image by executing a converting process of the image (annulus ring image) suitable for the case where the installation direction of the camera is the vertical direction.

In S215, the outputting unit 1107 outputs the image converted in S206 or S207. As mentioned above, an outputting form of the image is the delivery to the outside of the camera, the recording to a recording medium, or the like.

The process by the flowchart of FIG. 9B is ended.

As mentioned above, in the embodiment, information for allowing the installation direction of the camera and the time-dependent relation between the position and size of the object displayed in the image in the case where the camera has been installed in the installation direction to be associated with each other is preliminarily stored. After that, the installation direction of the camera is discriminated on the basis of the photographed images of a plurality of frames and the stored information. A distortion of the photographed image is corrected on the basis of the decided installation direction of the camera. Therefore, the installation direction of the camera can be automatically discriminated. The user settings accompanied with the installation of the camera can be simplified. Thus, the distortion correcting process which is optimum to the pickup image can be easily executed in correspondence to the installation direction of the camera.

In the embodiment, the case where the installation direction of the camera (direction in which an optical axis of the fisheye lens faces) is set to the two directions of the vertical direction and the perpendicular direction has been described as an example. However, the installation direction of the camera is not limited to those two directions but, for example, it may not strictly coincide with the vertical direction and the perpendicular direction. The installation direction of the camera may be an arbitrary direction so long as it is an installation direction of the camera in which a relation with the feature of the image photographed by using the fisheye lens can be decided.

In the embodiment, the case where the process for discriminating the installation direction of the camera and the developing process (distortion correction) according to the installation direction of the camera are executed by the same image processing apparatus 1100 has been described as an example. However, it is not always necessary to use such a method. The process for discriminating the installation direction of the camera may be executed by an image pickup apparatus different from the image processing apparatus 1100 or by the image processing apparatus 1100 and an information processing apparatus different from the image pickup apparatus. According to the construction of the image processing apparatus 1100 of the embodiment, since the installation direction of the image pickup apparatus having the wide-angle image pickup unit can be automatically discriminated, the detecting process can be efficiently executed.

### <Fourth Embodiment>

Subsequently, the fourth embodiment will be described. In the third embodiment, the case where the image to which the distortion correction (the double panoramic conversion or the panoramic conversion of the midportion of the image) has been performed is output (delivered or recorded) has been described as an example. On the other hand, in the embodiment, a case where distortion correction information as information showing the installation direction of the camera is added to the image before the image processing apparatus performs the distortion correction and a resultant image is output will be described as an example. As mentioned above, the embodiment and the third embodiment differ mainly with respect to processes after the installation direction of the camera was discriminated. Therefore, in the description of the embodiment, substantially the same portions as those in the third embodiment are designated by the same reference numerals as those shown in FIGS. 8 to 11 and their detailed description is omitted.

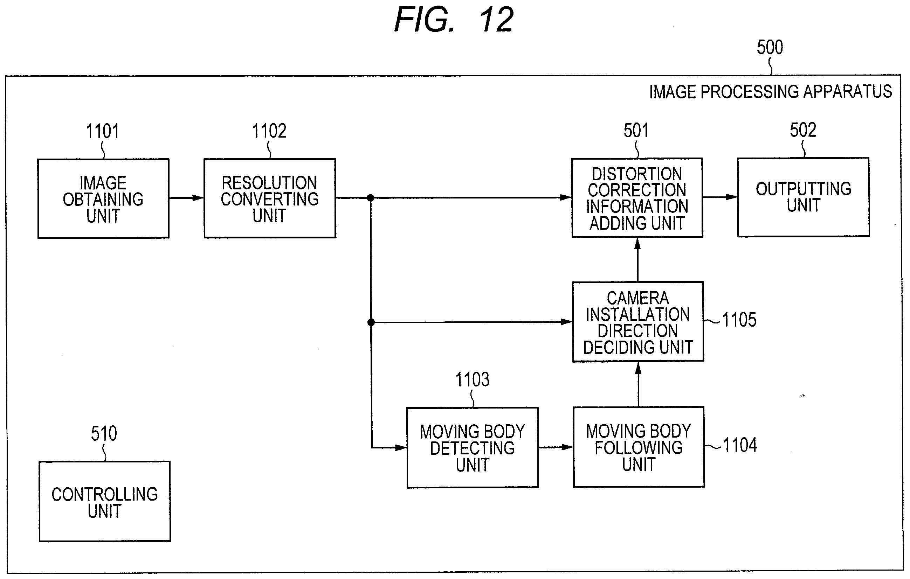

FIG. 12 is a block diagram illustrating an example of a construction of an image processing apparatus 500 of the embodiment.

In FIG. 12, the image processing apparatus 500 has the image obtaining unit 1101, the resolution converting unit 1102, the moving body detecting unit 1103, the moving body following unit 1104, the camera installation direction deciding unit 1105 (hereinbelow, referred to as a "direction deciding unit 1105"), a distortion correction information adding unit 501, and an outputting unit 502. The image obtaining unit 1101, resolution converting unit 1102, moving body detecting unit 1103, and moving body following unit 1104 are substantially the same as those illustrated in FIG. 8.

The distortion correction information adding unit 501 adds the distortion correction information corresponding to the installation direction of the camera decided by the direction deciding unit 1105 to the image which was output from the resolution converting unit 1102 and outputs a resultant image to the outputting unit 502. The outputting unit 502 outputs the image whose distortion is not corrected (the image which was output from the resolution converting unit 1102) and the distortion correction information corresponding to the installation direction of the camera. An outputting form by the outputting unit 502 is, for example, at least one of the delivery to the outside of the camera, the recording to the recording apparatus out of the camera, and the recording to the media built in the camera. A controlling unit 510 is constructed by a CPU or the like and integratedly controls the whole image processing apparatus 500.

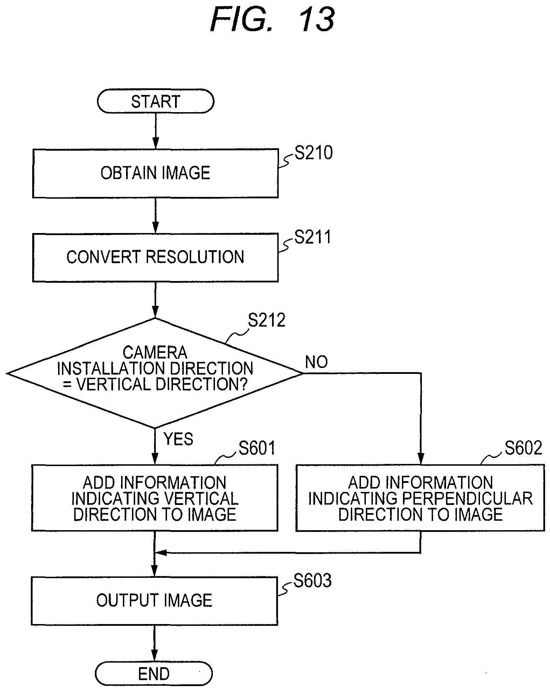

Subsequently, an example of a flow for the process of the image processing apparatus 500 in the case of deciding a developing processing method of the image photographed by using the fisheye will be described with reference to a flowchart of FIG. 13.

Processes of S210 to S212 in FIG. 13 are substantially the same as those of S210 to S212 in FIG. 9B described in the third embodiment.

In S212, if it is determined that the installation direction of the camera is the vertical direction, S601 follows. In S601, the distortion correction information adding unit 501 adds the distortion correction information showing that the installation direction of the camera is the vertical direction to the image which was output from the resolution converting unit 1102 and outputs the image to which the distortion correction information has been added to the outputting unit 502. The processing routine advances to S603, which will be described hereinafter.

On the other hand, in S205, if it is determined that the installation direction of the camera is the perpendicular direction, S602 follows. In S602, the distortion correction information adding unit 501 adds the distortion correction information showing that the installation direction of the camera is the vertical direction to the image which was output from the resolution converting unit 1102 and outputs the image to which the distortion correction information has been added to the outputting unit 502. The processing routine advances to S603, which will be described hereinafter.

In S603, the outputting unit 502 outputs the image to which the distortion correction information has been added. The process by the flowchart of FIG. 13 is ended.

When the outputting unit 502 delivers the image to which the distortion correction information has been added to the outside, the external apparatus on the delivery destination side executes, for example, the following processes. First, the external apparatus receives the image to which the distortion correction information has been added. On the basis of the installation direction of the camera shown in the distortion correction information, the external apparatus executes the distortion correction (developing process) of the received image and displays the image to which the distortion correction (developing process) has been performed.

When the outputting unit 502 records the image to which the distortion correction information has been added, the apparatus for processing the image to which the distortion correction information has been added executes, for example, the following processes. First, in response to an instruction of the user to the apparatus, the apparatus reads out the image to which the distortion correction information has been added. On the basis of the installation direction of the camera shown in the distortion correction information, the apparatus executes the distortion correction (developing process) of the image and displays the image to which the distortion correction (developing process) has been performed. In place of the display of the image or in addition to the display of the image, the recording, delivery, or the like of the image may be performed.

By using such a method as mentioned above, substantially the same effects as those described in the third embodiment can be also obtained.

Also in the embodiment, the various modifications described in the third embodiment can be used.

### <Fifth Embodiment>

Subsequently, the fifth embodiment will be described. In the third and fourth embodiments, the case of discriminating the installation direction of the camera on the basis of the relations between the positions and sizes of the objects in a plurality of frames has been described as an example. On the other hand, in the fifth embodiment, the installation direction of the camera is discriminated on the basis of a result of the recognition of the object in the image. As mentioned above, the embodiment and the third and fourth embodiments differ mainly with respect to the discriminating method of the installation direction of the camera. Therefore, in the description of the embodiment, substantially the same portions as those in the third and fourth embodiments are designated by the same reference numerals as those shown in FIGS. 8 to 13 and their detailed description is omitted.

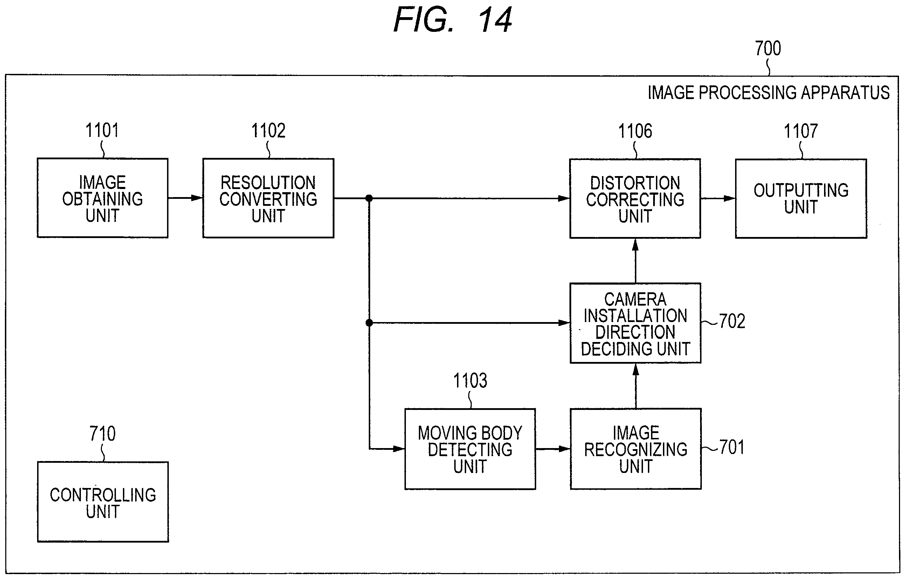

FIG. 14 is a block diagram illustrating an example of a construction of an image processing apparatus 700 of the embodiment.

In FIG. 14, the image processing apparatus 700 has the image obtaining unit 1101, the resolution converting unit 1102, the moving body detecting unit 1103, the distortion correcting unit 1106, the outputting unit 1107, an image recognizing unit 701, and a camera installation direction deciding unit 702. The image obtaining unit 1101, resolution converting unit 1102, moving body detecting unit 1103, distortion correcting unit 1106, and outputting unit 1107 are substantially the same as those illustrated in FIG. 8.

The image recognizing unit 701 detects a preset object (for example, a human body or face) from a moving body following result which was output from the moving body following unit 1104 and outputs a result of the detection.

The camera installation direction deciding unit 702 discriminates the installation direction of the camera from a feature of the way of display based on characteristics of the lens of the object in the image with respect to the object (for example, a human body, face, or the like) detected in the image recognizing unit 701. In the embodiment, the camera installation direction deciding unit 702 discriminates the installation direction of the camera from the position and direction of the object detected in the image recognizing unit 701. A controlling unit 710 is constructed by a CPU or the like and integratedly controls the whole image processing apparatus 700.

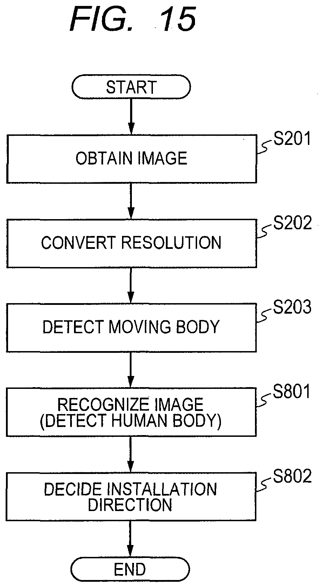

Subsequently, an example of a flow for the process of the image processing apparatus 700 in the case of discriminating the installation direction of the camera will be described with reference to a flowchart of FIG. 15.

Processes of S201 to S203 in FIG. 15 are substantially the same as those of S201 to S203 in FIG. 9A described in the third embodiment.

In S801, the image recognizing unit 701 detects a body of an object to be photographed such as a human body, face, or the like from the moving body detected by the moving body detecting unit 1103. In this instance, a case of detecting a human body as an image recognition will be described as an example. However, an area of the object to be recognized is not limited to the human body but may be a face or another body. In any of those cases, the image recognizing unit 701 can extract the area of the object by using a well-known image recognizing process such as a method whereby an area to be recognized is extracted by comparing a feature amount of the image with a feature amount regarding the area to be recognized, or the like.

The image recognizing unit 701 outputs an image recognition result including the position on the display screen of the body detected as a human body, a circumscribed rectangle of the body, and a size of the body.

Subsequently, in S802, on the basis of the image which was output from the resolution converting unit 1102 and the image recognition result which was output from the image recognizing unit 701, the camera installation direction deciding unit 702 discriminates the installation direction of the camera and stores the determined installation direction of the camera. The process by the flowchart of FIG. 15 is ended.

An example of a method of discriminating the installation direction of the camera will be described hereinbelow with reference to FIGS. 10 and 11. In this instance, a description will be made on the assumption that when the installation direction of the camera is the vertical direction, the vertical direction is a downward direction (direction which faces the ground surface).

As for the human body photographed by using the fisheye lens, a location where it is detected and a direction where it is photographed differ in dependence on the installation direction of the camera.

For example, when the installation direction of the camera is the vertical direction, in the area inside of the boundary line 1308 near the center of the annulus ring image 1302 in FIG. 10, since the human body is photographed from the head portion, it cannot be detected as a human body. The human body is easily detected in the area between the boundary lines 1308 and 1309. When the installation direction of the camera is the vertical direction, as illustrated in FIG. 10, there is such a feature that the human bodies 1305, 1306, and 1307 are radially detected around the center of the annulus ring image 1302.

When the installation direction of the camera is the perpendicular direction, the human body is easily detected near the center of the annulus ring image 1402 in FIG. 11. When the installation direction of the camera is the perpendicular direction, as illustrated in FIG. 11, there is such a feature that the human bodies 1406, 1407, and 1408 are erectly detected in the radial direction in the midportion of the annulus ring image 1402.

The camera installation direction deciding unit 702 stores information showing the relations between the feature of the result of the human body detection to the image as mentioned above and the installation direction of the camera. The camera installation direction deciding unit 702 discriminates the installation direction of the camera on the basis of the photographed image (annulus ring image) and the stored information. An inputting form of the information is not limited. For example, the information may be input to the image processing apparatus 700 by using a user interface of the image processing apparatus 700 or may be transmitted from the external apparatus to the image processing apparatus 700.

Specifically speaking, from the image recognition result of the image which was output from the resolution converting unit 1102, if it is determined that the human bodies were radially detected in the area between the boundary lines 1308 and 1309 as illustrated in FIG. 10, the camera installation direction deciding unit 702 decides that the installation direction of the camera is the vertical direction. On the other hand, from the image recognition result of the image which was output from the resolution converting unit 1102, if it is determined that the human bodies were erectly detected in the radial direction in the midportion of the image (annulus ring image) as illustrated in FIG. 11, the camera installation direction deciding unit 702 decides that the installation direction of the camera is the perpendicular direction. As mentioned above, the camera installation direction deciding unit 702 discriminates the installation direction of the camera from the image recognition result which was output from the image recognizing unit 701.

As mentioned above, in the embodiment, the information for allowing the installation direction of the camera and the human body detection result (position and direction of the human body) to the image in the case where the camera has been installed in the installation direction to be associated with each other is previously stored. After that, the installation direction of the camera is discriminated on the basis of the photographed image of one frame and the stored information. Even if such a method is used, substantially the same effects as those described in the third embodiment can be obtained.

In the image processing apparatus 700 illustrated in FIG. 14, the case where the image is output after the distortion correction (double panoramic conversion or panoramic conversion of the midportion of the image) was performed like the third embodiment will be described as an example. However, as described in the fourth embodiment, the distortion correction is not performed in the image processing apparatus but the image to which the information showing the installation direction of the camera has been added may be output. In the case of using such a method, in place of the distortion correcting unit 1106 in FIG. 14, the distortion correction information adding unit 501 in FIG. 12 is provided for the image processing apparatus 700. In place of the processes of FIG. 9B, the processes of FIG. 13 are executed.

Only the direction (for example, a layout direction of a plurality of bodies) on the image of the bodies such as human bodies or the like detected by the image recognizing unit 701 may be considered. That is, whether or not the plurality of bodies are arranged in the circumferential direction or are arranged in the radial direction may be discriminated. Only the positions on the image of the bodies such as human bodies or the like detected by the image recognizing unit 701 may be considered. For example, if the human bodies were detected near the center of the annulus ring image 1302, it is possible to determine that the installation direction of the camera is the perpendicular direction..

Also in the embodiment, the various modifications described in the third and fourth embodiments can be used.

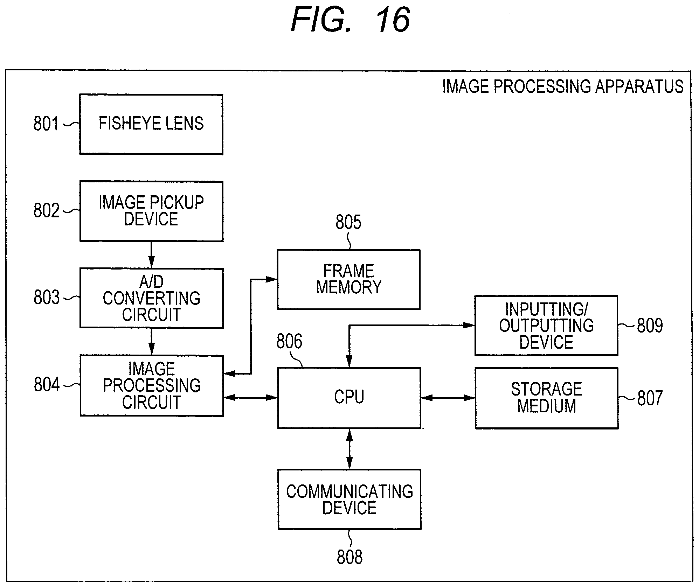

FIG. 16 is a diagram illustrating an example of a construction of hardware of the image processing apparatuses 100, 600, 1100, 500, and 700 in the foregoing first to fifth embodiments.

The image processing apparatus has a fisheye lens 801, an image pickup device 802, an A/D converting circuit 803, an image processing circuit 804, a frame memory 805, a CPU 806, a storage medium 807, and a communicating device 808.

Light which passed through the fisheye lens 801 is focused onto an image pickup surface of the image pickup device 802. The A/D converting circuit 803 converts an analog signal transmitted from the image pickup device 802 into a digital signal (image signal). The image processing circuit 804 reads out the image signal from the A/D converting circuit 803, stores into the frame memory 805, and executes various kinds of signal processes at predetermined frame rates. The storage medium 807 has, for example, a ROM, a RAM, an HDD, and the like. The storage medium 807 stores programs for executing the flowcharts of FIGS. 5, 7, 9A, 9B, 13, and 15 mentioned above and the like. The storage medium 807 also stores other various kinds of information necessary for the processes in the foregoing embodiments. The CPU 806 executes the programs stored in the storage medium 807 and executes the processes in the foregoing embodiments. Besides, the CPU 806 executes processes for integratedly controlling the whole image processing apparatus. The communicating device 808 communicates with the external apparatus. An inputting/outputting device 809 is a user interface and has various kinds of operating units. The inputting/outputting device 809 may have a display. In the foregoing embodiments, the case where the wide-angle image pickup unit having the fisheye lens is used as a wide-angle image pickup unit has mainly been described as an example. However, the constructions of the embodiments can be also realized by using a wide-angle image pickup unit of another system such as an omnidirectional mirror or the like.

### <Other Embodiments>

Embodiment(s) of the present invention can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer-executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments.

## Claims

1. An image processing apparatus comprising:
first obtaining means (101) for obtaining an image based on an image picked up by a wide-angle image pickup unit;
second obtaining means (103) for obtaining installation direction information regarding an image pickup direction of the wide-angle image pickup unit;
determining means (104) for determining, on the basis of the installation direction information obtained by the second obtaining means, a priority area for execution of an object detecting process, wherein the priority area is a part of the image obtained by the first obtaining means; and
detecting means (106) for executing the object detecting process in accordance with the determination of the determining means,
wherein the object detecting process is executed in a whole area of the image starting from the priority area.

2. The image processing apparatus according to Claim 1, wherein the wide-angle image pickup unit is image pickup means using a fisheye lens or an omnidirectional mirror.

3. The image processing apparatus according to Claim 1, wherein the object detecting process is stopped after a predetermined time.

4. The image processing apparatus according to Claim 1, wherein the second obtaining means obtains the installation direction information on the basis of a user input.

5. The image processing apparatus according to Claim 1, further comprising moving object detecting means (602) for detecting a moving object, and
wherein the second obtaining means (103) obtains the installation direction information by using at least one of position information and size information of the moving object detected from the image by the moving object detecting means.

6. The image processing apparatus according to Claim 1, further comprising developing means for executing a developing process for reducing a distortion of the pickup image by the wide-angle image pickup unit, and
wherein the detecting means executes the object detecting process to the image obtained by the developing process.

7. The image processing apparatus according to Claim 1, further comprising motion detecting means (602) for detecting a motion area from the pickup image, and
wherein the determining means determines the priority area of the object detecting process on the basis of the motion area detected by the motion detecting means and the installation direction information.

8. The image processing apparatus according to Claim 1, further comprising a correction means (105) for correcting a distortion of the wide-angle image picked up by the wide-angle image pickup unit based on the installation direction information, wherein the determination means determines the priority area for execution of an object detecting process based on the installation direction information obtained by the second obtaining unit, wherein the priority area is a part of the corrected image corrected by the correction means.

9. An image processing method comprising:
a first obtaining step (S501) of obtaining an image based on an image picked up by a wide-angle image pickup unit;
a second obtaining step (S503) of obtaining installation direction information regarding an image pickup direction of the wide-angle image pickup unit;
a determining step (S504-S509) of determining, on the basis of the installation direction information obtained in the second obtaining step, a priority area for execution of an object detecting process, wherein the priority area is a part of the image obtained in the first obtaining step; and
a detecting step (S507) of executing the object detecting process on the determined priority area,
wherein the object detecting process is executed in a whole area of the image starting from the priority area.

10. A non-transitory computer-readable storage medium storing a program for causing a computer to execute the method according to claim 9.

## Patentansprüche

1. Bildverarbeitungsvorrichtung, umfassend:
eine erste Erfassungseinrichtung (101) zum Erfassen eines Bilds basierend auf einem durch eine Weitwinkelbildaufnahmeeinheit aufgenommenen Bild;
eine zweite Erfassungseinrichtung (103) zum Erfassen von Aufstellungsrichtungsinformation bezüglich einer Bildaufnahmerichtung der Weitwinkelbildaufnahmeeinheit;
eine Bestimmungseinrichtung (104) zum Bestimmen eines Prioritätsgebiets zum Ausführen einer Objektdetektionsverarbeitung basierend auf der durch die zweite Erfassungseinrichtung erfassten Aufstellungsrichtungsinformation, wobei das Prioritätsgebiet ein Teil des durch die erste Erfassungseinrichtung erfassten Bilds ist; und
eine Detektionseinrichtung (106) zum Ausführen der Objektdetektionsverarbeitung gemäß der Bestimmung der Bestimmungseinrichtung,
wobei die Objektdetektionsverarbeitung in einem gesamten Gebiet des Bilds beginnend beim Prioritätsgebiet ausgeführt wird.

2. Bildverarbeitungsvorrichtung nach Anspruch 1, wobei die Weitwinkelbildaufnahmeeinheit eine Bildaufnahmeeinrichtung ist, die eine Fischaugenlinse oder einen omnidirektionalen Spiegel verwendet.

3. Bildverarbeitungsvorrichtung nach Anspruch 1, wobei die Objektdetektionsverarbeitung nach einer vorbestimmten Zeit angehalten wird.

4. Bildverarbeitungsvorrichtung nach Anspruch 1, wobei die zweite Erfassungseinrichtung die Aufstellungsrichtungsinformation basierend auf einer Benutzereingabe erfasst.

5. Bildverarbeitungsvorrichtung nach Anspruch 1, die weiterhin eine Bewegtobjektdetektionseinrichtung (602) zum Detektieren eines sich bewegenden Objekts umfasst, und
wobei die zweite Erfassungseinrichtung (103) die Aufstellungsrichtungsinformation erfasst, indem sie mindestens eines von Positionsinformation und Größeninformation des sich bewegenden Objekts verwendet, welches durch die Bewegtobjektdetektionseinrichtung aus dem Bild detektiert wurde.

6. Bildverarbeitungsvorrichtung nach Anspruch 1, weiterhin umfassend eine Entwicklungseinrichtung zum Ausführen einer Entwicklungsverarbeitung zum Reduzieren einer Verzerrung des Aufnahmebilds durch die Weitwinkelbildaufnahmeeinheit, und
wobei die Detektionseinrichtung die Objektdetektionsverarbeitung am durch die Entwicklungsverarbeitung erfassten Bild ausführt.

7. Bildverarbeitungsvorrichtung nach Anspruch 1, die weiterhin eine Bewegungsdetektionseinrichtung (602) zum Detektieren eines Bewegungsgebiets aus dem Aufnahmebild umfasst, und
wobei die Bestimmungseinrichtung das Prioritätsgebiet der Objektdetektionsverarbeitung basierend auf dem durch die Bewegungsdetektionseinrichtung detektierten Bewegungsgebiet und der Aufstellungsrichtungsinformation bestimmt.

8. Bildverarbeitungsvorrichtung nach Anspruch 1, die weiterhin eine Korrektureinrichtung (105) zum Korrigieren einer Verzerrung des durch die Weitwinkelbildaufnahmeeinheit aufgenommenen Weitwinkelbilds basierend auf der Aufstellungsrichtungsinformation umfasst, wobei die Bestimmungseinrichtung das Prioritätsgebiet zum Ausführen einer Objektdetektionsverarbeitung basierend auf der durch die zweite Erfassungseinheit erfassten Aufstellungsrichtungsinformation bestimmt, wobei das Prioritätsgebiet ein Teil des durch die Korrektureinrichtung korrigierten Bilds ist.

9. Bildverarbeitungsverfahren, umfassend:
einen ersten Erfassungsschritt (S501) des Erfassens eines Bilds basierend auf einem durch eine Weitwinkelbildaufnahmeeinheit aufgenommenen Bild;
einen zweiten Erfassungsschritt (S503) des Erfassens von Aufstellungsrichtungsinformation bezüglich einer Bildaufnahmerichtung der Weitwinkelbildaufnahmeeinheit;
einen Bestimmungsschritt (S504 - S509) des Bestimmens eines Prioritätsgebiets zum Ausführen einer Objektdetektionsverarbeitung basierend auf der im zweiten Erfassungsschritt erfassten Aufstellungsrichtungsinformation, wobei das Prioritätsgebiet ein Teil des im ersten Erfassungsschritt erfassten Bilds ist; und
einen Detektionsschritt (S507) zum Ausführen der Objektdetektionsverarbeitung im bestimmten Prioritätsgebiet,
wobei die Objektdetektionsverarbeitung in einem gesamten Gebiet des Bilds beginnend beim Prioritätsgebiet ausgeführt wird.

10. Nichtflüchtiges computerlesbares Speichermedium, das ein Programm speichert, welches einen Computer zum Ausführen des Verfahrens nach Anspruch 9 veranlasst.

## Revendications

1. Appareil de traitement d'image comprenant :
un premier moyen d'obtention (101) destiné à obtenir une image sur la base d'une image prise par une unité de prise d'image à grand angle ;
un deuxième moyen d'obtention (103) destiné à obtenir des informations de direction d'installation concernant une direction de prise d'image de l'unité de prise d'image à grand angle ;
un moyen de détermination (104) destiné à déterminer, sur la base des informations de direction d'installation obtenues par le deuxième moyen d'obtention, une zone de priorité pour l'exécution d'un processus de détection d'objet, où la zone de priorité est une partie de l'image obtenue par le premier moyen d'obtention ;
un moyen de détection (106) destiné à exécuter le processus de détection d'objet conformément à la détermination du moyen de détermination,
dans lequel le processus de détection d'objet est exécuté dans une zone entière de l'image en partant de la zone de priorité.

2. Appareil de traitement d'image selon la revendication 1, dans lequel l'unité de prise d'image à grand angle est un moyen de prise d'image utilisant un objectif fisheye ou un miroir omnidirectionnel.

3. Appareil de traitement d'image selon la revendication 1, dans lequel le processus de détection d'objet est interrompu au bout d'un temps prédéterminé.

4. Appareil de traitement d'image selon la revendication 1, dans lequel le deuxième moyen d'obtention obtient les informations de direction d'installation sur la base d'une entrée d'utilisateur.

5. Appareil de traitement d'image selon la revendication 1, comprenant en outre un moyen de détection d'objet en mouvement (602) destiné à détecter un objet en mouvement, et
dans lequel le deuxième moyen d'obtention (103) obtient les informations de direction d'installation en utilisant au moins l'une d'informations de position et d'informations de taille de l'objet en mouvement détecté à partir de l'image par le moyen de détection d'objet en mouvement.

6. Appareil de traitement d'image selon la revendication 1, comprenant en outre un moyen de développement destiné à exécuter un processus de développement pour réduire une distorsion de l'image prise par l'unité de prise d'image à grand angle, et
dans lequel le moyen de détection exécute le processus de détection d'objet sur l'image obtenue par le processus de développement.

7. Appareil de traitement d'image selon la revendication 1, comprenant en outre un moyen de détection de mouvement (602) destiné à détecter un zone de mouvement à partir de l'image prise, et
dans lequel le moyen de détermination détermine la zone de priorité du processus de détection d'objet sur la base de la zone de mouvement détectée par le moyen de détection de mouvement et des informations de direction d'installation.

8. Appareil de traitement d'image selon la revendication 1, comprenant en outre un moyen de correction (105) destiné à corriger une distorsion de l'image à grand angle prise par l'unité de prise d'image à grand angle sur la base des informations de direction d'installation, dans lequel le moyen de détermination détermine la zone de priorité pour l'exécution d'un processus de détection d'objet sur la base des informations de direction d'installation obtenues par la deuxième unité d'obtention, où la zone de priorité est une partie de l'image corrigée ayant été corrigée par le moyen de correction.

9. Procédé de traitement d'image comprenant :
une première étape d'obtention (S501) consistant à obtenir une image sur la base d'une image prise par une unité de prise d'image à grand angle ;
une deuxième étape d'obtention (S5503) consistant à obtenir des informations de direction d'installation concernant une direction de prise d'image de l'unité de prise d'image à grand angle ;
une étape de détermination (S504-S509) consistant à déterminer, sur la base des informations de direction d'installation obtenues lors de la deuxième étape d'obtention, une zone de priorité pour l'exécution d'un processus de détection d'objet, où la zone de priorité est une partie de l'image obtenue dans la première étape d'obtention ; et
une étape de détection (S507) consistant à exécuter le processus de détection d'objet sur la zone de priorité déterminée,
dans lequel le processus de détection d'objet est exécuté dans une zone entière de l'image en partant de la zone de priorité.

10. Support de stockage non volatil lisible par ordinateur stockant un programme destiné à amener un ordinateur à mettre en oeuvre le procédé selon la revendication 9.
